(19) Europäisches Patentamt
European Patent Office
Office européen des brevets

(11) EP 1 025 057 B1

(12) # EUROPÄISCHE PATENTSCHRIFT

(45) Veröffentlichungstag und Bekanntmachung des Hinweises auf die Patenterteilung:
**23.08.2017 Patentblatt 2017/34**

(21) Anmeldenummer: **98954417.6**

(22) Anmeldetag: **14.10.1998**

(51) Int Cl.:
***C03C 17/32*** (2006.01) ***G02B 5/28*** (2006.01)

(86) Internationale Anmeldenummer:
**PCT/EP1998/006527**

(87) Internationale Veröffentlichungsnummer:
**WO 1999/019267 (22.04.1999 Gazette 1999/16)**

(54) **WÄRMEISOLATIONSBESCHICHTUNG**

THERMAL INSULATING COATING

REVETEMENT D'ISOLATION THERMIQUE

(84) Benannte Vertragsstaaten:
**AT BE DE DK ES FR GB IT NL PT SE**

(30) Priorität: **15.10.1997 DE 19745647**

(43) Veröffentlichungstag der Anmeldung:
**09.08.2000 Patentblatt 2000/32**

(73) Patentinhaber: **BASF SE**
**67056 Ludwigshafen am Rhein (DE)**

(72) Erfinder:
- **SIEMENSMEYER, Karl**
  **D-67227 Frankenthal (DE)**
- **SCHUHMACHER, Peter**
  **D-68163 Mannheim (DE)**
- **MEYER, Frank**
  **D-68165 Mannheim (DE)**
- **SCHNEIDER, Norbert**
  **D-67122 Altrip (DE)**
- **ISHIDA, Hiroki**
  **D-67434 Neustadt (DE)**

(74) Vertreter: **BASF IP Association**
**BASF SE**
**G-FLP-C006**
**67056 Ludwigshafen (DE)**

(56) Entgegenhaltungen:
**EP-A- 0 348 141** **EP-A- 0 860 717**
**EP-A- 0 875 525** **WO-A-89/02093**
**WO-A-98/14528** **WO-A1-97/35219**
**DE-A1- 19 602 848**

- **DATABASE WPI Section Ch, Week 9247 Derwent Publications Ltd., London, GB; Class A89, AN 92-384555 XP002091912 & JP 04 281403 A (NIPPON SHEET GLASS CO LTD), 7. Oktober 1992**
- **DAVIS G M: "LIQUID CRYSTAL POLYMER THIN FILM ANISOTROPIC OPTICAL COMPONENTS" SHAPU GIHO / SHARP TECHNICAL JOURNAL, Bd. 63, Nr. 12, Dezember 1995, Seiten 22-25, XP000610950**

Bemerkungen:
Die Akte enthält technische Angaben, die nach dem Eingang der Anmeldung eingereicht wurden und die nicht in dieser Patentschrift enthalten sind.

EP 1 025 057 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Wärmeisolationsbeschichtung, die eine oder mehrere cholesterische IR-reflektierende Schichten umfasst.

Das Problem der Abschirmung von Wärmestrahlung stellt sich insbesondere bei der Isolation von Wohn-, Büro- oder Industriebauten. Gebäude mit großzügigen Fensterflächen heizen sich insbesondere im Sommer und vor allem in südlichen Regionen schnell soweit auf, dass sie mit erheblichem Energieaufwand durch Klimaanlagen gekühlt werden müssen.

Gängige Verfahren zur Wärmeisolation, insbesondere zur Abschirmung von Wärmestrahlung im Wellenlängenbereich zwischen 800 nm und 2000 nm basieren auf der Absorption der Strahlung durch entsprechende Farbstoffe oder Pigmente. Die aufgenommene Energie wird jedoch durch Wärmeleitung zum großen Teil an den zu isolierenden Gegenstand oder Raum abgegeben.

Es ist auch bekannt, Materialien einzusetzen, die Wärmestrahlung weitgehend reflektieren.

Hierfür werden als breitbandige Absorber oder Reflektoren vielfach spezielle Farbstoffe oder Pigmente aber auch Graphit oder Gold verwendet.

Als Farbstoffe kommen hierbei beispielsweise breitbandig im Infraroten (IR) absorbierende Naphthalocyanine oder auch verpackte Polymethinfarbstoffe zum Einsatz. Die IR-absorbierenden Farbstoffe weisen jedoch als gravierenden Nachteil auch im sichtbaren Wellenlängenbereich eine deutliche Absorption auf, so dass eine erhebliche Verringerung der Transparenz zu beobachten ist. Die absorbierte Strahlungsenergie wird in thermische Energie umgewandelt, die über Wärmeleitung dissipiert.

Graphit, Gold, Silber oder Indium-Zinn-Oxid (ITO), die auch als Absorber bzw. Reflektoren für IR-Strahlung eingesetzt werden, weisen vergleichbare Nachteile auf. Auch hier ist, insbesondere im sichtbaren Bereich des Spektrums, eine sehr geringe Transparenz gegeben. Nur durch sehr präzise und daher aufwendige Herstellung extrem dünner Schichten wird eine hinreichend gleichmäßige hohe Transmission im sichtbaren Wellenlängenbereich gewährleistet. Solche Metallschichten werden in der Regel durch Aufdampfverfahren wie Chemical Vapor Deposition oder Physical Vapor Deposition aufgetragen, die sehr aufwendig sind.

Es ist ebenfalls bekannt, dass auch cholesterische flüssigkristalline Substanzen im IR-Bereich des elektromagnetischen Spektrums Licht reflektieren können. Cholesterische (chiral nematische) Flüssigkristalle sind bereits seit langem bekannt. Das erste Beispiel eines solchen Materials wurde von dem österreichischen Botaniker F. Reinitzer gefunden (Monatshefte Chemie, 9 (1888), 421). Die Voraussetzung für das Auftreten cholesterischer Phasen ist die Chiralität. Der chirale Molekülteil kann sowohl im flüssigkristallinen Molekül selbst vorgegeben sein, als auch als Dotierstoff zur nematischen Phase gegeben werden, wodurch die chiral nematische Phase induziert wird. Die chiral nematische Phase hat besondere optische Eigenschaften: eine hohe optische Rotation sowie einen ausgeprägten Circulardichroismus, der durch Selektivreflexion von circular polarisiertem Licht innerhalb der nematischen Schicht entsteht. Dies hat zur Folge, dass maximal 50 % des mit der Reflexionswellenlänge eingestrahlten Lichtes reflektiert werden. Der Rest geht ohne Wechselwirkung mit dem Medium hindurch. Der Drehsinn des reflektierten Lichtes wird dabei durch den Drehsinn der Helix bestimmt: Eine Rechtshelix reflektiert rechts-circular polarisiertes Licht, eine Linkshelix linkscircular polarisiertes Licht. Durch Änderung der Konzentration eines chiralen Dotierstoffs kann die Ganghöhe und damit der Wellenlängenbereich selektiv reflektierten Lichtes einer chiral nematischen Schicht variiert werden. Hierbei besteht zwischen der reziproken beobachteten Ganghöhe p und der Konzentration der chiralen Verbindung ($x_{ch}$) eine direkte Beziehung:

$$1/p = HTP\ x_{ch}$$

HTP steht für Helical Twisting Power und gibt das Verdrillungsvermögen des chiralen Dotierstoffes an.

Aus der US-A-4,637,896 sind cholesterische flüssigkristalline Verbindungen auf der Basis von Cholesterin-Derivaten sowie photopolymerisierte cholesterische Beschichtungen, die diese einpolymerisiert enthalten, bekannt. Die beschriebenen cholesterischen Filme weisen mehrheitlich Reflexionsmaxima im sichtbaren Wellenlängenbereich auf. Es werden jedoch auch zwei Beispiele für farblose Filme angegeben, deren Reflexionsmaxima bei 950 bzw. 1260 nm liegen. Der engen Reflexionsbreite wegen sind diese Filme aber nicht als Wärmeisolationsbeschichtung geeignet.

Aus der US-A-5,629,055 sind feste cholesterische Filme auf Cellulose-Basis bekannt. Die Filme sind aus Kolloid-Suspensionen von Cellulosekristalliten erhältlich, wobei die Kolloid-Suspensionen durch saure Hydrolyse kristalliner Cellulose hergestellt werden. Die festen Filme haben cholesterische Eigenschaften und ihre Reflexionswellenlänge sollen über den gesamten Spektralbereich von Infrarot bis Ultraviolett einstellbar sein. Die beschriebenen Materialien werden insbesondere als optische Authentifizierungsmittel vorgeschlagen, da Druck- oder Fotokopiertechniken den cholesterischen Effekt nicht reproduzieren können.

Die US-A-5,352,312 beschreibt ein Verfahren zur Isolierung von Raketenmotoren gegen Hitze und korrosive Stoffe. Das Verfahren umfasst den Einsatz eines ablativen Isoliermaterials, das ein thermoplastisches flüssigkristallines Polymer enthält. Das flüssigkristalline Material ist jedoch nicht cholesterisch und die Isolierwirkung beruht auf dem ablativen Effekt und nicht auf der Reflexion von Wärmestrahlung.

Aus der US-A-5,016,985 ist ein Infrarotfilter bekannt, der ein Breitband-Infrarotfilterelement sowie ein cholesterisches flüssigkristallines Filterelement umfasst. Die Bedeutung des cholesterischen Filterelements liegt insbesondere in seiner Fähigkeit, infrarote Wellenlängen in einem präzisen engen Band zu blockieren. Der Infrarotfilter ist beispielsweise in Nachtsichtgeräten verwendbar.

Der Erfindung liegt daher die Aufgabe zugrunde, leicht herzustellende Wärmeisolationsmittel bereitzustellen, die im sichtbaren Bereich des elektromagnetischen Spektrums nahezu vollständig transparent sind und die nur eine sehr geringe Absorption im nahen infraroten sowie im sichtbaren Wellenlängenbereich des elektromagnetischen Spektrums aufweisen.

Überraschenderweise wurde gefunden, dass Beschichtungen, die mindestens eine cholesterische IR-reflektierende Schicht umfassen, diesen Anforderungen genügen.

Gegenstand der Erfindung ist eine Wärmeisolationsbeschichtung, umfassend mehrere vernetzte oder polymerisierte cholesterische Schichten mit gleichmäßiger Orientierung der cholesterischen Moleküle, die im infraroten Wellenlängenbereich von oberhalb 750 nm bis 2000 nm mindestens 40% der auftreffenden Strahlung reflektieren; wobei die Wärmeisolationsbeschichtung mindestens ein achirales, nematisches, polymerisierbares Monomer und einen chiralen Dotierstoff, oder mindestens ein achirales, flüssigkristallines vernetzbares Polymer und einen chiralen Dotierstoff jeweils in vernetztem oder polymerisiertem Zustand enthält, wobei der chirale Dotierstoff wenigstens eine Verbindung der allgemeinen Formel Ia ist,

$$[Z^1\text{-}Y^1\text{-}A^1\text{-}Y^2\text{-}M^a\text{-}Y^3\text{-}]_n\ X \qquad \text{(Ia)}$$

worin die Variablen die die folgenden Bedeutungen besitzen:

$Z^1$ eine polymerisierbare Gruppe oder ein Rest, der eine polymerisierbare Gruppe trägt, ausgewählt unter: $CH_2$=CH- , CH ≡ C- ,

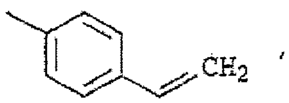 , . 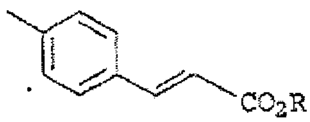

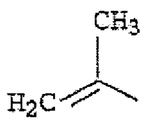 , 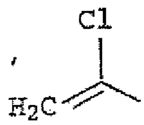 ,

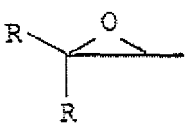 , 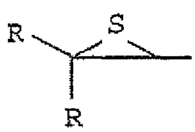 , 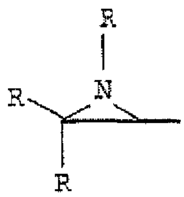 , 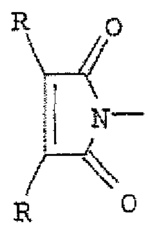

- N=C=O, -N=C=S, -O-C≡N, -COOH, -OH, und -$NH_2$;

$Y^1$, $Y^2$, $Y^3$ unabhängig voneinander chemische Bindungen, Sauerstoff, Schwefel,

-CO-O-,-O-CO-. -O-CO-O-,
-CO-S-, -S-CO-
-CO-N(R)- , -N(R)-CO-, $CH_2O$ oder $OCH_2$,

$A^1$ ein Spacer, ausgewählt unter linearen aliphatischen Gruppen, enthaltend 2 bis 30 C-Atome,

$M^a$ für die Gruppe der Formel $(T-Y^8)_s-T$ steht,

worin $Y^8$ für $Y^1$ steht,
s für 1 bis 3 steht,
T für gleiche oder verschiedene zweiwertige isocycloaliphatische, heterocycloaliphatische, isoaromatische oder heteroaromatische Reste steht,

X ein n-wertiger chiraler Rest, ausgewählt unter:

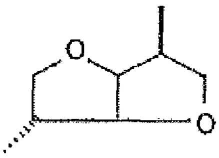 , 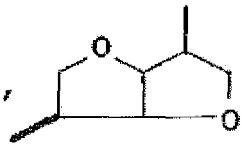 , 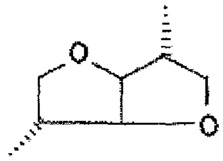 ,

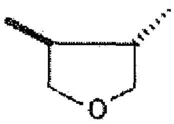 , 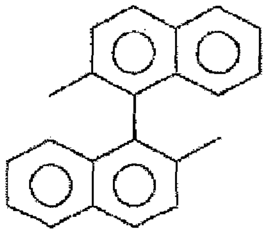 oder 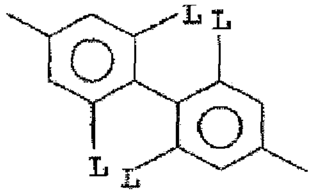

R Wasserstoff oder $C_1$-$C_4$-Alkyl,

n 1 bis 6

wobei die Reste $Z^1$, $Y^1$, $Y^2$, $Y^3$, $A^1$ und $M^a$, gleich oder verschieden sein können, wenn n größer als 1 ist; wobei die Wärmeisolationsbeschichtung die 2 bis 20 cholesterische IR-reflektierende Schichten umfasst, die voneinander verschiedene Reflexionsmaxima im Wellenlängenbereich > 750 nm aufweisen.

Gegenstand der vorliegenden Erfindung ist insbesondere eine derartige Wärmeisolationsbeschichtung, die im Wellenlängenbereich von 751 nm bis etwa 2000 nm mindestens 40%, insbesondere mindestens 45% der auftreffenden Strahlung reflektiert.

Die erfindungsgemäße Wärmeisolationsbeschichtung weist eine Reihe überraschender Vorteile auf:

a) auftreffende Strahlung wird im sichtbaren Wellenlängenbereich fast vollständig transmittiert, so dass die Beschichtung durchsichtig erscheint.

b) auftreffendes Licht im infraroten Bereich des elektromagnetischen Spektrums wird weitestgehend reflektiert und nicht absorbiert, so dass das zu isolierende Objekt nicht durch Wärmeleitung aufgeheizt wird.

c) auftreffende Wärmestrahlung wird breitbandig reflektiert, was eine effiziente Isolierung von Gegenständen ermöglicht.

d) Dicke und Gleichmäßigkeit der Beschichtung können ohne signifikanten Einfluss auf ihre Isolationseigenschaften in einem weiten Bereich variieren, so dass ihre Herstellung erheblich weniger aufwendig ist, als die beispielsweise von metallhaltigen Reflexionsbeschichtungen.

e) Der Einsatz ökologisch und toxikologisch nicht unbedenklicher Metalle wird vermieden.

f) Die Ausgangsverbindungen für die Herstellung der Beschichtung sind wirtschaftlich gut zugänglich; ihr Einsatz ist somit in der Regel preisgünstiger als der von beispielsweise Gold oder Silber in Reflexionsbeschichtungen.

Vorzugsweise weist die erfindungsgemäße Wärmeisolationsbeschichtung im Wellenlängenbereich des sichtbaren Lichtes, also etwa im Bereich von 390 nm bis 750 nm eine Transmission von mindestens 80 %, insbesondere mindestens 90 % der auftreffenden Strahlung auf.

Besonders bevorzugt ist eine erfindungsgemäße Wärmeisolationsbeschichtung, die

2 bis 10 cholesterische IR-reflektierende Schichten umfasst. Besonders bevorzugt weisen die Schichten unterschiedliche Reflexionsmaxima im Wellenlängenbereich > 750 nm auf. Ganz besonders bevorzugt umfasst die erfindungsgemäße Wärmeisolationsbeschichtung eine durch 2 teilbare Anzahl cholesterischer Schichten, wie z. B. 2, 4, 6, 8 oder 10, wobei die Ganghöhe der helicalen Überstrukturen von jeweils 2, vorzugsweise benachbarten, Schichten gleich, ihre Händigkeit jedoch unterschiedlich ist. Gleichfalls ganz besonders bevorzugt ist eine erfindungsgemäße Wärmeisolationsbeschichtung, die zwischen Schichten mit helicaler Überstruktur gleicher Ganghöhe und gleicher Händigkeit ein Medium aufweist, das die Drehrichtung des transmittierten circular polarisierten Lichtes umkehrt, insbesondere eine sogenannte $\lambda/2$-Folie oder -Platte.

Der Einsatz von Schichten unterschiedlicher Händigkeit oder eines die Drehrichtung des transmittierten circularpolarisierten Lichtes umkehrenden Mediums zwischen Schichten gleicher Händigkeit kann die Reflexion der erfindungsgemäßen Wärmeisolationsbeschichtung erheblich erhöhen. Vorzugsweise werden so im Wellenlängenbereich oberhalb 750 nm, insbesondere im Wellenlängenbereich von 751 nm bis etwa 2000 nm, Reflexionsgrade von mindestens 75 %, insbesondere von mindestens 85 %, bezogen auf die auftreffende Strahlung, erreicht.

Hierin beschriebene Wärmeisolationsbeschichtungen enthalten cholesterische Verbindungen oder Gemische von Verbindungen, die ausgewählt sind unter

a) mindestens einem cholesterischen polymerisierbaren Monomer;

b) mindestens einem achiralen, nematischen, polymerisierbaren Monomer und einer chiralen Verbindung;

c) mindestens einem cholesterischen vernetzbaren Polymer;

d) mindestens einem cholesterischen Polymer in einem polymerisierbaren Verdünnungsmittel oder einem Gemisch polymerisierbarer Verdünnungsmittel;

e) mindestens einem cholesterischen Polymer, dessen cholesterische Phase durch schnelles Abkühlen unter die Glasübergangstemperatur eingefroren werden kann; oder

f) mindestens einem achiralen, flüssigkristallinen vernetzbaren Polymer und einer chiralen Verbindung;

in gehärtetem Zustand enthalten, wobei obige Varianten a) und c) bis e) nicht Gegenstand der vorliegenden Erfindung sind.

Im Rahmen der vorliegenden Erfindung wird unter Vernetzung die kovalente Verknüpfung polymerer Verbindungen und unter Polymerisation die kovalente Verknüpfung monomerer Verbindungen zu Polymeren verstanden. Unter Härtung wird Vernetzung, Polymerisation oder das Einfrieren der cholesterischen Phase verstanden.

Durch Härtung wird die gleichmäßige Orientierung der cholesterischen Moleküle in der Cholesterschicht fixiert.

Monomere der Gruppe a) sind in der DE-A-196 02 848 sowie in der DE-A-4 342 280 beschrieben, auf die hiermit in vollem Umfang Bezug genommen wird. Insbesondere umfassen die Monomere a) mindestens ein chirales, flüssigkristallines, polymerisierbares Monomer der Formel I

$$\left[ Z^1 - Y^1 - A^1 - Y^2 - M^1 - Y^3 - \right]_n X \qquad (I)$$

in der die Variablen die folgende Bedeutung haben:

$Z^1$ eine polymerisierbare Gruppe oder ein Rest, der eine polymerisierbare Gruppe trägt,

$Y^1, Y^2, Y^3$ unabhängig voneinander chemische Bindungen, Sauerstoff, Schwefel, CO-O-, -O-CO-, -O-CO-O-, -CO-S- , -S-CO- CO-N(R)- , -N(R)-CO- , $CH_2O$ oder $OCH_2$

$A^1$ ein Spacer,

| | |
|---|---|
| $M^1$ | eine mesogene Gruppe, |
| X | ein n-wertiger chiraler Rest, |
| R | Wasserstoff oder $C_1$-$C_4$-Alkyl, |
| n | 1 bis 6 |

wobei die Reste $Z^1$, $Y^1$, $Y^2$, $Y^3$, $A^1$ und $M^1$, gleich oder verschieden sein können, wenn n größer als 1 ist.

Bevorzugte Reste $Z^1$ sind:

$CH_2=CH-$, $CH\equiv C-$, 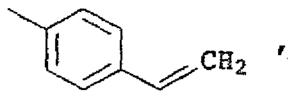, 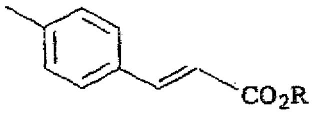

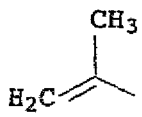, 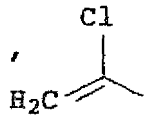,

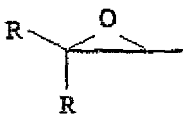, 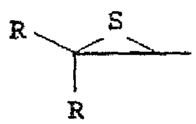, 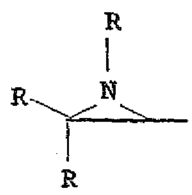, 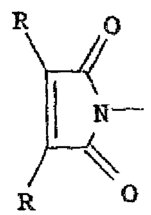

- N=C=O, -N=C=S, -O-C≡ N,
- COOH, -OH oder - $NH_2$,

wobei die Reste R gleich oder verschieden sein können und Wasserstoff oder $C_1$-$C_4$-Alkyl, wie Methyl, Ethyl, n-Propyl, iso-Propyl, n-Butyl, iso-Butyl, sec.-Butyl oder tert.-Butyl, bedeuten. Von den reaktiven polymerisierbaren Gruppen können die Cyanate spontan zu Cyanuraten trimerisieren und sind daher bevorzugt. Die anderen genannten Gruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimidogruppe eignet sich besonders zur radikalischen Copolymerisation mit olefinischen Verbindungen wie Styrol. Die komplementären reaktiven Gruppen können dabei entweder in einer zweiten erfindungsgemäßen Verbindung vorhanden sein, die mit der ersteren gemischt wird, oder sie können durch Hilfsverbindungen, die 2 oder mehr dieser komplementären Gruppen enthalten, in das polymere Netzwerk eingebaut werden.

Besonders bevorzugte Gruppierungen $Z^1$-$Y^1$ sind Acrylat und Methacrylat.

$Y^1$-$Y^3$ können die oben genannten Bedeutungen haben, wobei unter einer chemischen Bindung eine kovalente Einfachbindung verstanden werden soll.

Als Spacer $A^1$ kommen alle für diesen Zweck bekannten Gruppen in Betracht. Die Spacer enthalten in der Regel 2 bis 30, vorzugsweise 2 bis 12 C-Atome und bestehen aus linearen aliphatischen Gruppen. Sie können in der Kette z.B. durch O, S, NH oder $NCH_3$ unterbrochen sein, wobei diese Gruppen nicht benachbart sein dürfen. Als Substituenten für die Spacerkette kommen dabei noch Fluor, Chlor, Brom, Cyan, Methyl oder Ethyl in Betracht.

Repräsentative Spacer sind beispielsweise:

$-(CH_2)_P-$, $-(CH_2CH_2O)_mCH_2CH_2-$, $-CH_2CH_2SCH_2CH_2-$, $-CH_2CH_2NHCH_2CH_2-$,

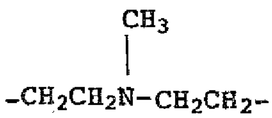, 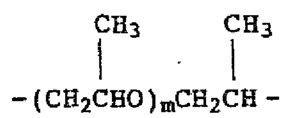, 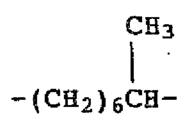 oder 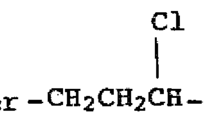,

wobei

m für 1 bis 3 und
p für 1 bis 12 steht.

Die mesogene Gruppe $M^1$ hat vorzugsweise die Struktur

$$(T-Y^8)_s-T$$

wobei $Y^8$ ein Brückenglied gemäß einer der Definitionen von $Y^1$, s eine Zahl von 1 bis 3 und T gleiche oder verschiedene zweiwertige isacycloaliphatische, heterocycloaliphatische, isoaromatische oder heteroaromatische Reste bedeuten. Wenn s für eine Zahl >1 steht, können die Brückenglieder $Y^8$ gleich oder verschieden sein.

Die Reste T können auch durch $C_1$-$C_4$-Alkyl, $C_1$-$C_4$-Alkoxy, Fluor, Chlor, Brom, Cyan, Hydroxy oder Nitro substituierte Ringsysteme sein. Bevorzugte Reste T sind:

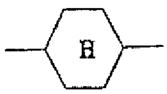 , 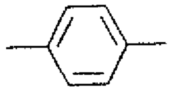 , 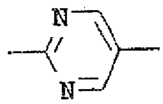 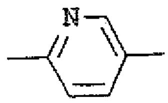 ,

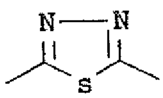 , 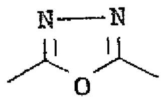 , 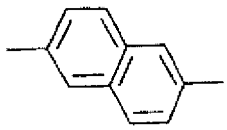 ,

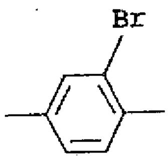 , 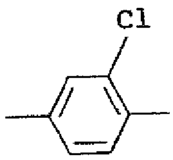 , 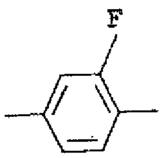 , 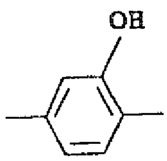 , 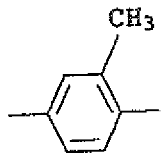 ,

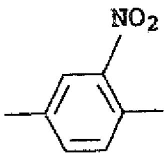 , 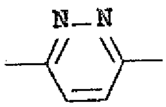 , 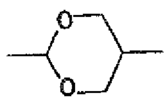 , 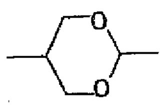 ,

$CH=CH$ , 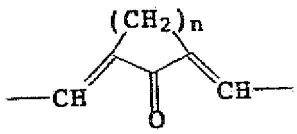 , 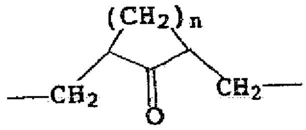 ,

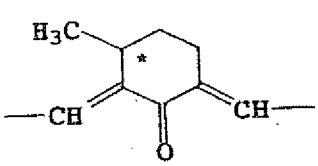 , 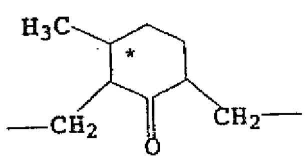 , $-N=N-$ ,

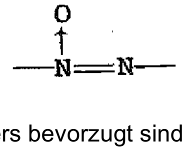 , $-CH=N-$ und 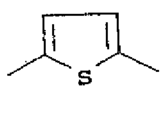 .

Besonders bevorzugt sind die folgenden mesogenen Gruppen $M^1$:

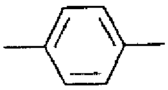 , 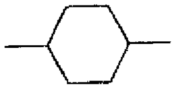 , 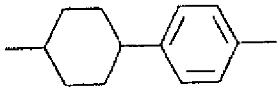 , 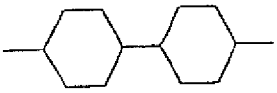 ,

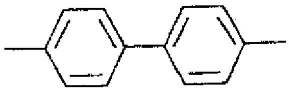 , 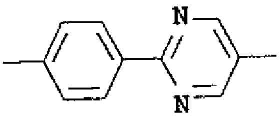 , 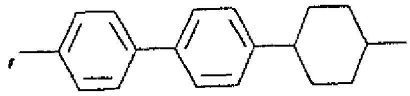 ,

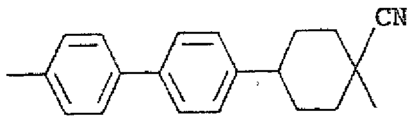 , 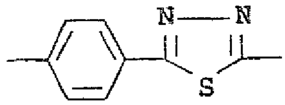 ,

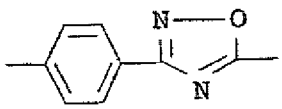 , 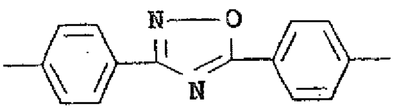 ,

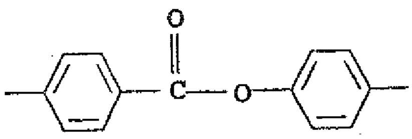 , 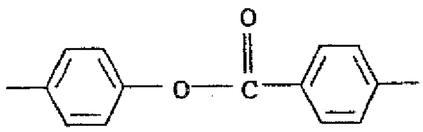 ,

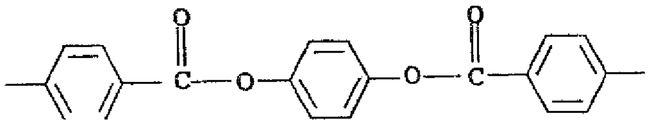 ,

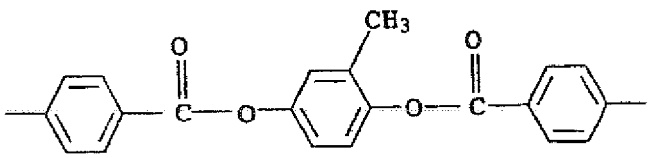 ,

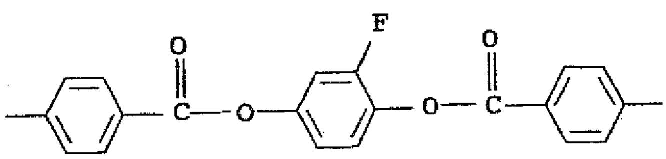 ,

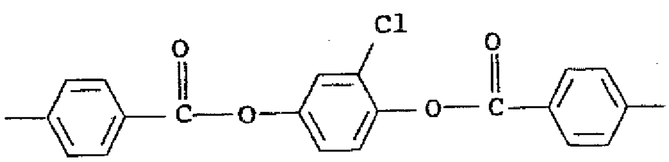

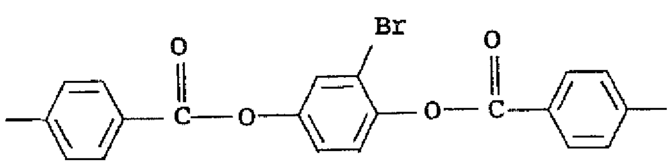 ,

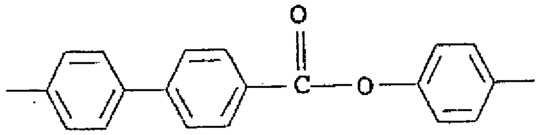 ,

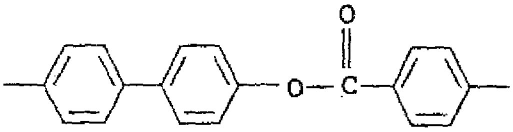 , 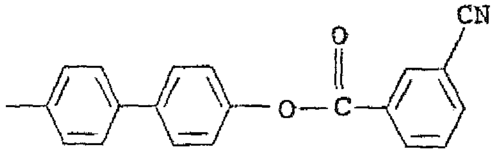 ,

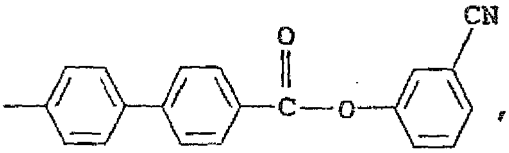 , 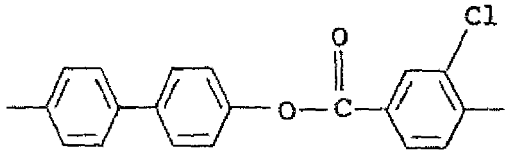 ,

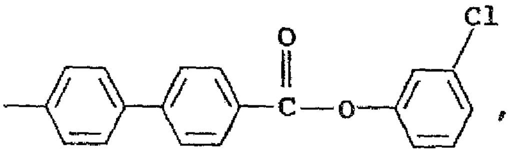 , 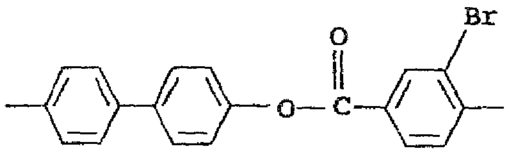 ,

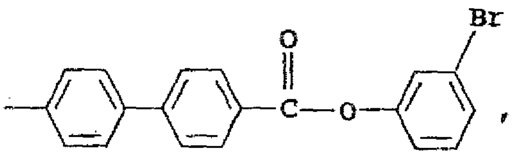 , 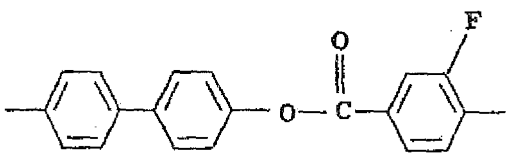 .

Von den chiralen Resten X der Verbindungen der Formel I sind u.a. aufgrund der Verfügbarkeit insbesondere solche bevorzugt, die sich von Zuckern, Binaphthyl- oder Biphenylderivaten sowie optisch aktiven Glykolen, Dialkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten.

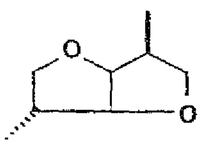 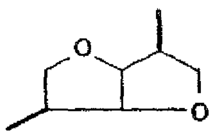 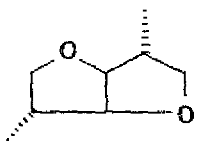

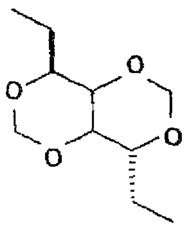 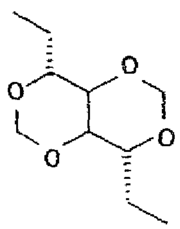

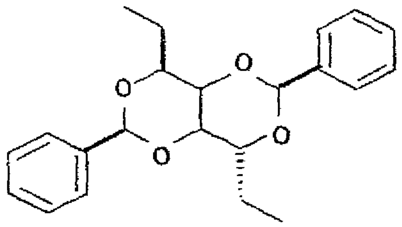
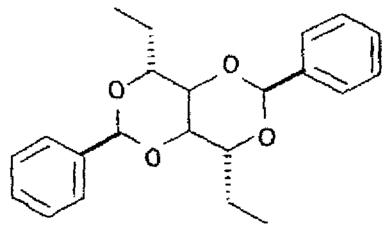

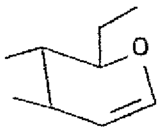
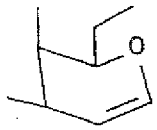
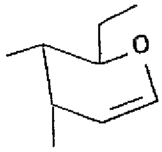
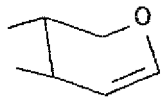

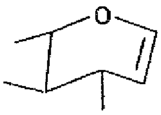
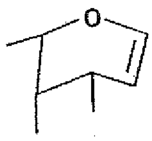
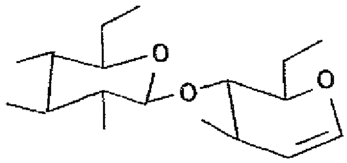

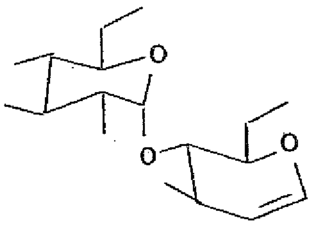
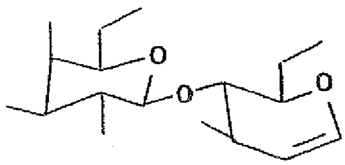

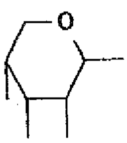
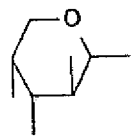
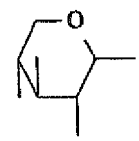
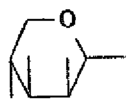

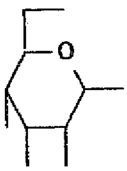
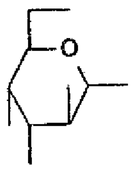
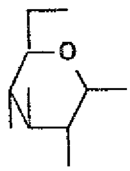
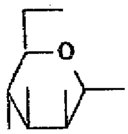

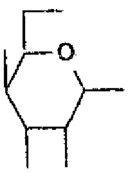
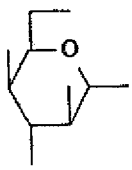
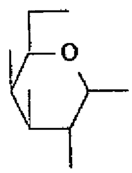
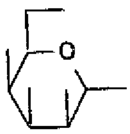

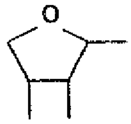
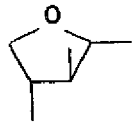
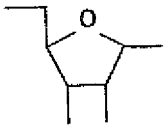
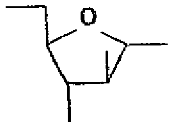
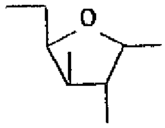

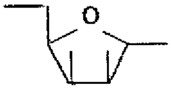
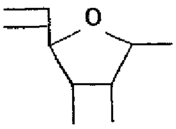
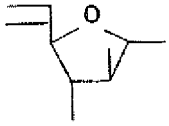
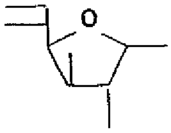
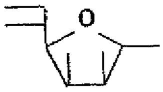

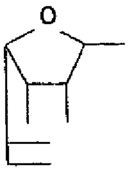
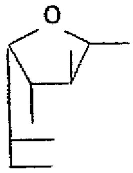
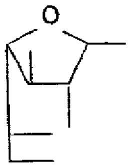
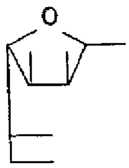

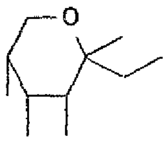
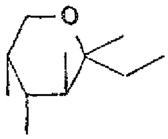
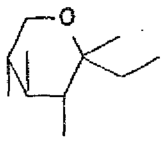
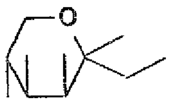
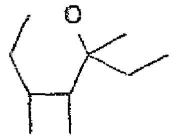

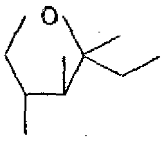
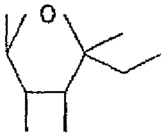
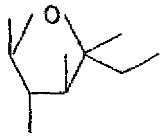
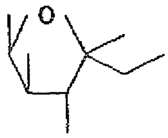
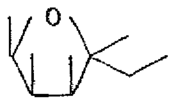

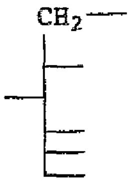
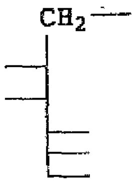
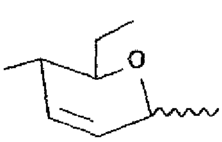
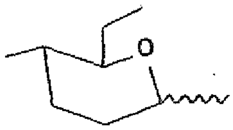

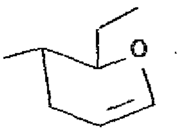
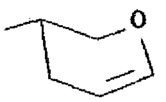
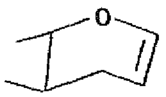
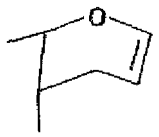

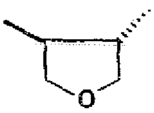
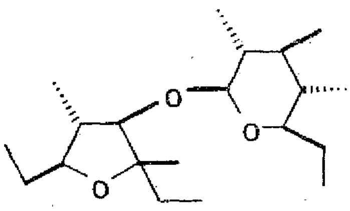

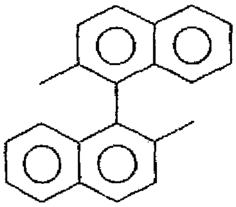

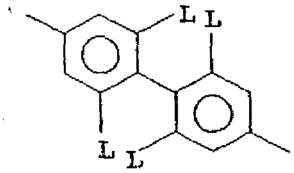

Besonders bevorzugt sind

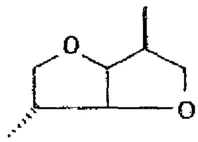 , 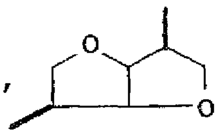 , 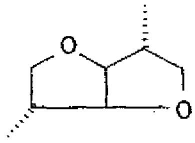 ,

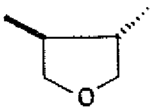 , 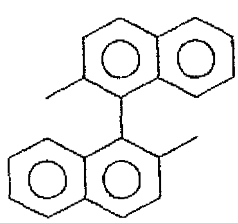 oder 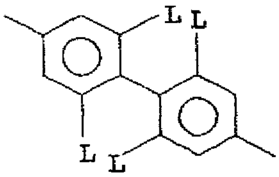

Weiterhin sind auch chirale Gruppen geeignet, die folgende Strukturen aufweisen:

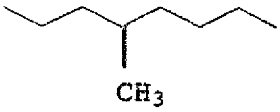

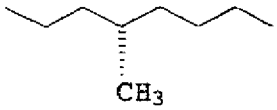

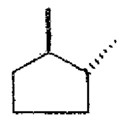

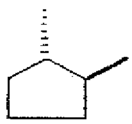

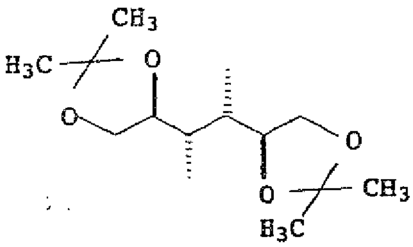

Weitere Beispiele sind in der deutschen Anmeldung P 43 42 280.2 aufgeführt.

n ist bevorzugt 2.

Spezielle Monomere der Gruppe a) sind ferner chirale polymerisierbare Cholesterinderivate, wie sie in der DE-A-35 35 547 und der US-A-4,637,896 beschrieben werden, auf die hiermit in vollem Umfang Bezug genommen wird.

Bevorzugte Monomere der Gruppe b) sind beispielsweise in der Dissertation von H. Jonsson, Department of Polymer Technology, Royal Institute of Technology, S-10044 Stockholm, Schweden, vom 25. 01. 1991, in der DE-A-4 408 171, der DE-A-4 408 170 sowie der DE-A-4 405 316 beschrieben, auf die hiermit in vollem Umfang Bezug genommen wird. Vorzugsweise enthält das cholesterische Gemisch mindestens ein achirales flüssigkristallines polymerisierbares Monomer der Formel II

$$Z^2\text{-}Y^4\text{-}A^2\text{-}Y^5\text{-}M^2\text{-}Y^6\text{-}A^3\text{-}(\text{-}Y^7\text{-}Z^3)_n \qquad \text{(II)}$$

in der die Variablen die folgende Bedeutung haben:

$Z^2$, $Z^3$ gleiche oder verschiedene polymerisierbare Gruppen oder Reste, die eine polymerisierbare Gruppe enthalten

n 0 oder 1

$Y^4,Y^5,Y^6,Y^7$ unabhängig voneinander chemische Bindungen, Sauerstoff, Schwefel, -CO-O-, -O-CO-, -O-CO-O-, -CO-S- , -S-CO--CO-N(R)- , -N(R)-CO- , $CH_2O$ oder $OCH_2$,

$A^2,A^3$ gleiche oder verschiedene Spacer und

$M^2$ eine mesogene Gruppe.

Dabei gelten für die polymerisierbaren Gruppen, die Brückenglieder $Y^4$ bis $Y^7$, die Spacer und die mesogene Gruppe die gleichen Bevorzugungen wie für die entsprechenden Variablen der Formel I.

Außerdem enthält das Gemisch der Gruppe b) eine chirale Verbindung. Die chirale Verbindung bewirkt die Verdrillung der achiralen flüssigkristallinen Phase zu einer cholesterischen Phase. Dabei hängt das Ausmaß der Verdrillung von der Verdrillungsfähigkeit des chiralen Dotierstoffs und von seiner Konzentration ab. Damit hängt also die Ganghöhe der Helix und wiederum auch die Reflexionswellenlänge von der Konzentration des chiralen Dotierstoffs ab. Es kann daher für den Dotierstoff kein allgemeingültiger Konzentrationsbereich angegeben werden. Der Dotierstoff wird in der Menge zugegeben, bei der die gewünschte Reflexion entsteht.

Bevorzugte chirale Verbindungen sind solche der Formel Ia

$$\left[ Z^1 - Y^1 - A^1 - Y^2 - M^a - Y^3 - \right]_n X \qquad \text{(Ia)},$$

in der $Z^1$, $Y^1$, $Y^2$, $Y^3$, $A^1$, X und n die obengenannten Bedeutung haben und $M^a$ ein zweiwertiger Rest ist, der mindestens ein hetero- oder isocyclisches Ringsystem enthält.

Der Molekülteil $M^a$ ähnelt dabei den beschriebenen mesogenen Gruppen, da auf diese Weise eine besonders gute Kompatibilität mit der flüssigkristallinen Verbindung erreicht wird. $M^a$ muß jedoch nicht mesogen sein, da die Verbindung Ia lediglich durch ihre chirale Struktur eine entsprechende Verdrillung der flüssigkristallinen Phase bewirken soll. Bevorzugte Ringsysteme, die in $M^a$ enthalten sind, sind die oben erwähnten Strukturen T, bevorzugte Strukturen $M^a$ solche der oben genannten Formel $(T\text{-}Y^8)_s\text{-}T$. Weitere Monomere und chirale Verbindungen der Gruppe b) sind in der WO 97/00600 und der ihr zugrundeliegenden DE-A-195 324 08 beschrieben, auf die hiermit in vollem Umfang Bezug genommen wird.

Hier beschriebene Polymere der Gruppe c) sind cholesterische Cellulosederivate, wie sie in der DE-A-197 136 38 beschrieben werden, insbesondere cholesterische Mischester von

(VI) Hydroxyalkylethern der Cellulose mit
(VII) gesättigten, aliphatischen oder aromatischen Carbonsäuren und
(VIII) ungesättigten Mono- oder Dicarbonsäuren.

Besonders bevorzugt sind Mischester, bei denen die über Etherfunktionen gebundenen Hydroxyalkylreste der Komponente VI geradkettige oder verzweigte $C_2$-$C_{10}$-Hydroxyalkylreste, insbesondere Hydroxypropyl- und/oder Hydroxyethylreste umfassen. Die Komponente VI der einsetzbaren Mischester weist vorzugsweise ein Molekulargewicht von etwa 500 bis etwa 1 Million auf. Bevorzugtermaßen sind die Anhydroglukose-Einheiten der Cellulose mit einem durchschnittlichen molaren Substitutionsgrad von 2 bis 4 mit Hydroxyalkylresten verethert. Die Hydroxyalkylgruppen in der Cellulose können gleich oder verschieden sein. Bis zu 50 % davon können auch durch Alkylgruppen (insbesondere $C_1$-$C_{10}$-Alkylgruppen) ersetzt werden. Ein Beispiel hierfür ist die Hydroxypropylmethylcellulose.

Als Komponente VII der einsetzbaren Mischester sind geradkettige aliphatische $C_1$-$C_{10}$-Carbonsäuren, insbesondere $C_2$-$C_6$-Carbonsäuren, verzweigte aliphatische $C_4$-$C_{10}$-Carbonsäuren, insbesondere $C_4$-$C_6$-Carbonsäuren oder geradkettige oder verzweigte Halogencarbonsäuren brauchbar. Die Komponente VII kann auch Benzoesäure oder aromatisch substituierte aliphatische Carbonsäuren, insbesondere Phenylessigsäure sein. Besonders bevorzugt ist die Komponente VII ausgewählt unter Essigsäure, Propionsäure, n-Buttersäure, Isobuttersäure oder n-Valeriansäure, insbesondere unter Propionsäure, 3-Cl-Propionsäure, n-Buttersäure oder Isobuttersäure.

Vorzugsweise ist die Komponente VIII ausgewählt unter ungesättigten $C_3$-$C_{12}$-Mono- oder Dicarbonsäuren oder Halbestern einer derartigen Dicarbonsäure, insbesondere $\alpha,\beta$-ethylenisch ungesättigten $C_3$-$C_6$-Mono- oder Dicarbonsäuren oder Halbestern der Dicarbonsäuren.

Die Komponente VIII der einsetzbaren Mischester ist besonders bevorzugt ausgewählt unter Acrylsäure, Methacrylsäure, Crotonsäure, Vinylessigsäure, Maleinsäure, Fumarsäure oder Undecensäure, insbesondere unter Acrylsäure oder Methacrylsäure.

Vorzugsweise ist die Komponente VI mit einem durchschnittlichen molaren Substitutionsgrad von 1,5 bis 3, insbesondere von 1,6 bis 2,7, besonders bevorzugt von 2,3 bis 2,6 mit der Komponente VII und VIII verestert. Vorzugsweise sind etwa 1 bis 30 %, insbesondere 1 bis 20 % oder 1 bis 10 %, besonders bevorzugt etwa 5 bis 7 % der OH-Gruppen der Komponente VI mit der Komponente VIII verestert.

Das Mengenverhältnis der Komponente VII zu Komponente VIII bestimmt die Reflexionswellenlänge des Polymers.

Gut geeignete Polymere der Gruppe c) sind außerdem die in der DE-A-197 17 371 beschriebenen, propargylterminierten, cholesterischen Polyester oder Polycarbonate.

Bevorzugt unter diesen Verbindungen sind Polyester oder Polycarbonate mit wenigstens einer Propargylendgruppe der Formel $R^3C{\equiv}C\text{-}CH_2\text{-}$, worin $R^3$ für H, $C_1$-$C_4$-Alkyl, Aryl oder Ar-$C_1$-$C_4$-alkyl (z. B. Benzyl oder Phenethyl) steht, die direkt oder über ein Bindeglied an die Polyester oder Polycarbonate gebunden ist. Das Bindeglied ist vorzugsweise ausgewählt unter

-o-, -S-, -$NR^4$-,

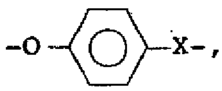, 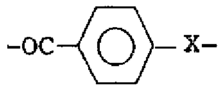,

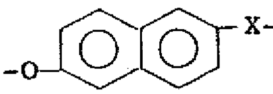 oder 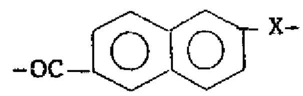

(die Propargylgruppe ist an X gebunden),

worin $R^4$ für H, $C_1$-$C_4$-Alkyl oder Phenyl steht, X für O, S oder $NR^2$ steht, und $R^2$ für H, $C_1$-$C_4$-Alkyl oder Phenyl steht.

Vorzugsweise ist in den Polyestern die Propargylendgruppe über

-O-, 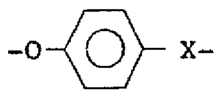 oder 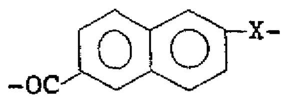 (X = O, S)

gebunden.

Die Polyester enthalten vorzugsweise

(IX) mindestens eine aromatische oder araliphatische Dicarbonsäureeinheit und/oder mindestens eine aromatische oder araliphatische Hydroxycarbonsäureeinheit und

(X) mindestens eine Dioleinheit.

Bevorzugte Dicarbonsäureeinheiten sind solche der Formel

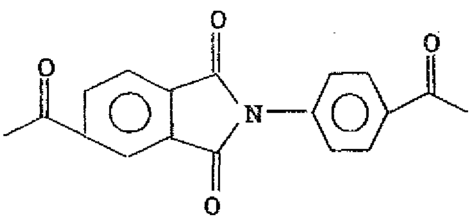,

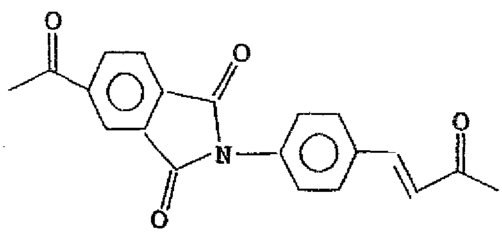,

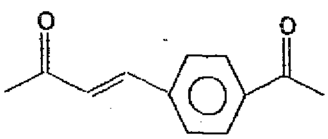,

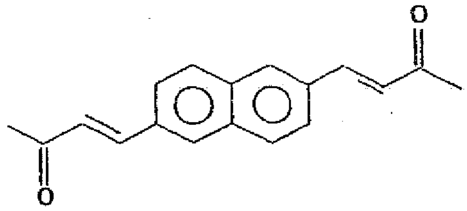

,

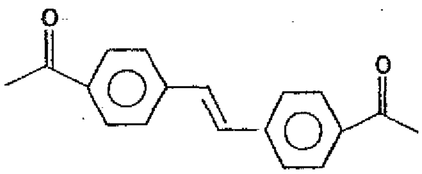

,

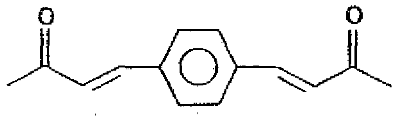

,

insbesondere solche der Formel

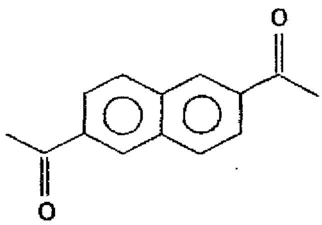

,

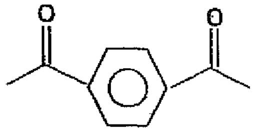

,

oder

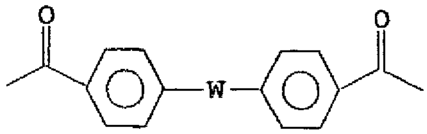

,

wobei jede der Phenylgruppe bzw. die Naphthylgruppe 1, 2 oder 3 Substituenten aufweisen kann, die unabhängig voneinander ausgewählt sind unter $C_1$-$C_4$-Alkyl, $C_1$-$C_4$-Alkoxy, Halogen oder Phenyl, wobei in den obigen Formeln

| | |
|---|---|
| W | für NR, S, O, $(CH_2)_pO(CH_2)_q$, $(CH_2)_m$ oder eine Einfachbindung steht, |
| R | Alkyl oder Wasserstoff bedeutet, |
| m | eine ganze Zahl von 1 bis 15 bedeutet, und |
| p und q | unabhängig voneinander für ganze Zahlen von 0 bis 10 stehen. |

Bevorzugte Hydroxycarbonsäureeinheiten sind solche der Formel

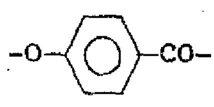

,

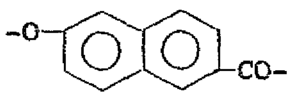

und

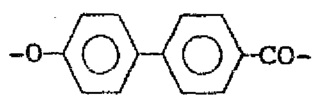

,

wobei jede Phenylgruppe oder die Naphthylgruppe 1, 2 oder 3 Substituenten aufweisen kann, die unabhängig voneinander ausgewählt sind unter $C_1$-$C_4$-Alkyl, $C_1$-$C_4$-Alkoxy, Halogen oder Phenyl.

Bevorzugte Dioleinheiten sind solche der Formel

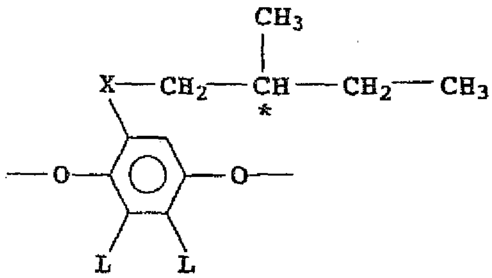,

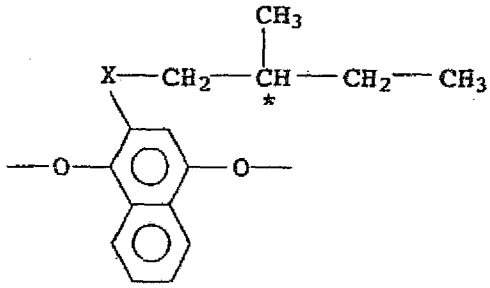,

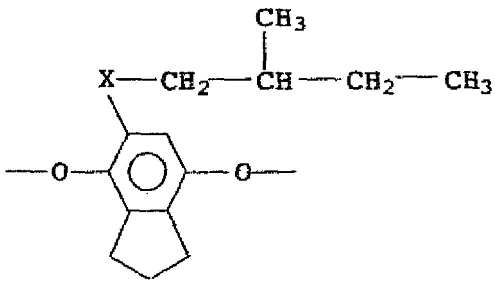,

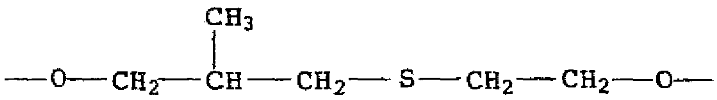,

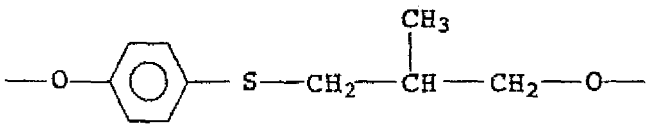,

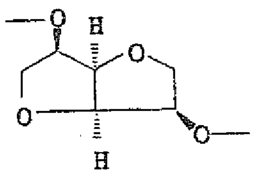,

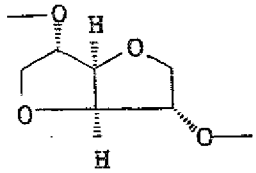,

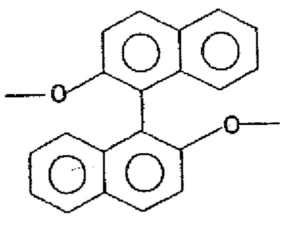,

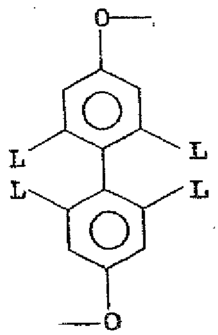,

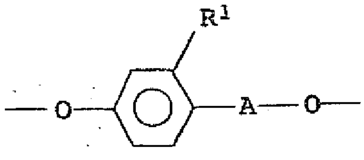,

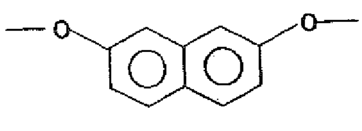,

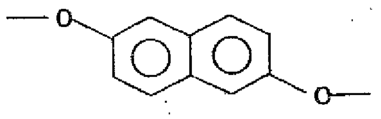 , $-O-(CH_2)_n-O-$ ,

insbesondere solche der Formel

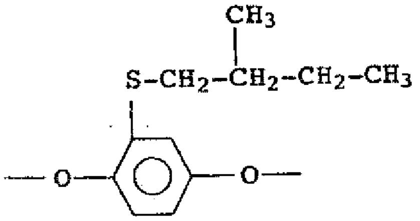 , 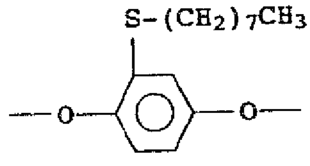 ,

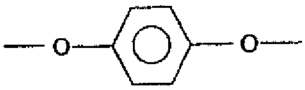 , 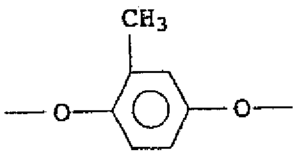 , 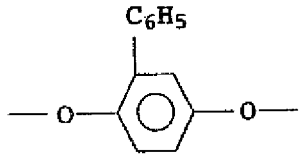 ,

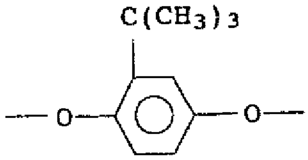 , 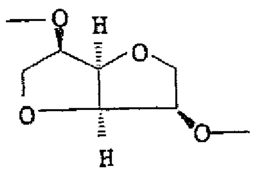 oder 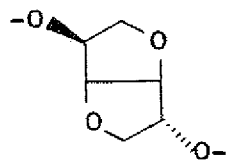 ,

wobei in den obigen Formeln

L für Alkyl, Alkoxy, Halogen, COOR, OCOR, CONHR oder NHCOR steht,
X für S, O, N, $CH_2$ oder eine Einfachbindung steht,
A eine Einfachbindung, $(CH_2)_n$, $O(CH_2)_n$, $S(CH_2)_n$, $NR(CH_2)_n$,

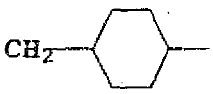 , 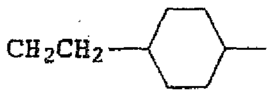 , 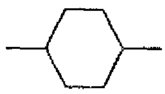 , 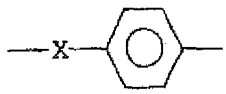

oder

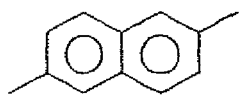

bedeutet,

R Alkyl oder Wasserstoff bedeutet,
$R^1$ Wasserstoff, Halogen, Alkyl oder Phenyl bedeutet und
n eine ganze Zahl von 1 bis 15 bedeutet.

Bevorzugt sind Polyester, die mindestens eine Dicarbonsäureeinheit der Formel

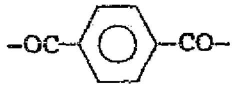 , 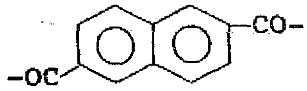

oder

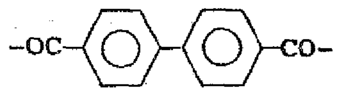 ,

und mindestens eine Dioleinheit der Formel

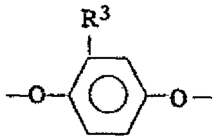 , 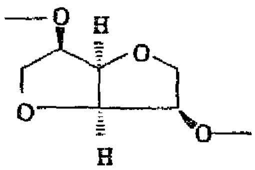 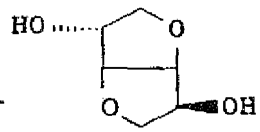 ,

wobei $R^3$ für H, Halogen, $C_1$-$C_4$-Alkyl, insbesondere $CH_3$ oder $C(CH_3)_3$, oder Phenyl steht, enthalten.

Weitere bevorzugte Verbindungen sind Diester der Formel P-Y-B-CO-O-A-O-CO-B-Y-P, worin P für eine Propargylendgruppe der oben definierten Formel steht, Y für O, S oder $NR^2$ ($R^2$ = $C_1$-$C_4$-Alkyl) steht, B für

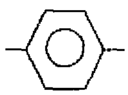 , 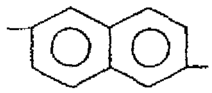 oder 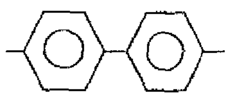

steht, wobei jede Phenylgruppe oder die Naphthylgruppe 1, 2 oder 3 Substituenten aufweisen kann, die unabhängig voneinander ausgewählt sind unter $C_1$-$C_4$-Alkyl, $C_1$-$C_4$-Alkoxy, Halogen oder Phenyl, und A (zusammen mit den benachbarten Sauerstoffatomen) für eine der oben genannten Dioleinheiten steht.

Besonders bevorzugte Diester sind solche der oben genannten Formel, in der B für

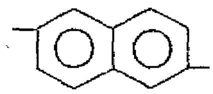 oder 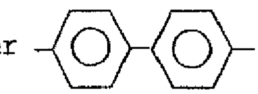

steht, und insbesondere Diester der Formel
$HC{\equiv}CCH_2O$-B-CO-O-A-O-CO-B-$OCH_2$-$C{\equiv}CH$, worin

(XI) B für

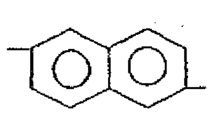

und
A für

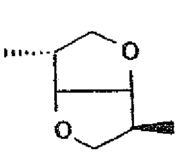 , 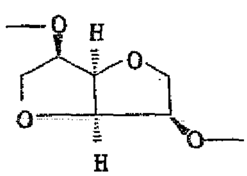 , 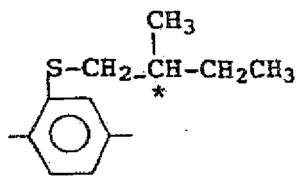 ,

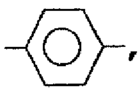, 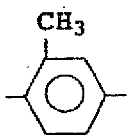, 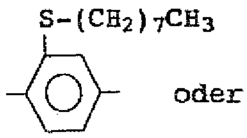 oder 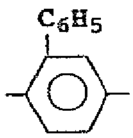

steht, oder

(XII) B für

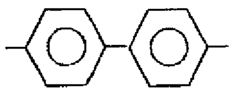

steht, und
A die unter XI genannten Bedeutungen besitzt.

Weitere bevorzugte Verbindungen sind Polycarbonate, die mindestens eine Dioleinheit der oben genannten Formeln, insbesondere der Formeln

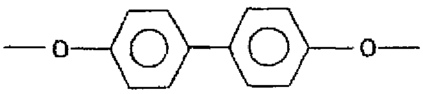, 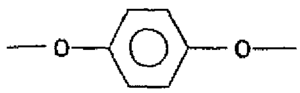, 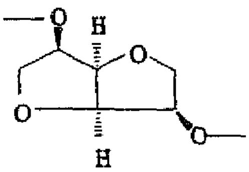,

oder 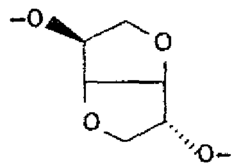

eingebaut enthalten.
Bevorzugte Polycarbonate sind dabei solche, die als Dioleinheiten mindestens eine mesogene Einheit der Formel

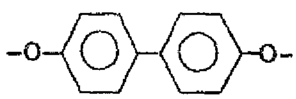 oder 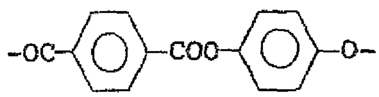

und
mindestens eine chirale Einheit der Formel

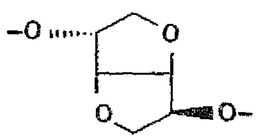 oder 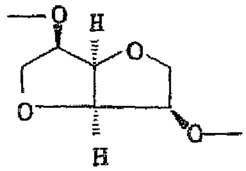

und gegebenenfalls eine nicht-chirale Einheit der Formel

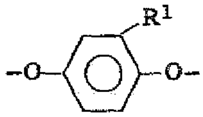

enthalten, wobei $R^1$ die oben angegebenen Bedeutungen besitzt und insbesondere für H oder $CH_3$ steht.

Besonders bevorzugte Polycarbonate sind solche mit Propargylendgruppen der Formel $HC{\equiv}CCH_2O\text{-}R^5\text{-}CO$, worin $R^5$ für

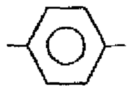

oder

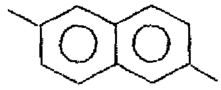

steht.

Als Polymere der Gruppe c) sind außerdem cholesterische Polycarbonate, die auch an nicht-terminaler Position photoreaktive Gruppen enthalten, geeignet. Solche Polycarbonate werden in der DE-A-196 31 658 beschrieben. Sie entsprechen vorzugsweise der Formel XIII

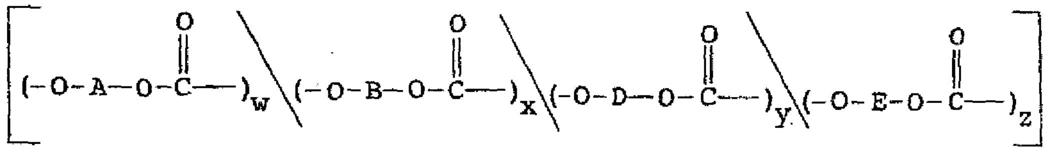,

(XIII)

wobei das Molverhältnis w/x/y/z etwa 1 bis 20/etwa 1 bis 5/etwa 0 bis 10/etwa 0 bis 10 beträgt. Besonders bevorzugt ist ein Molverhältnis w/x/y/z von etwa 1 bis 5/etwa 1 bis 2/etwa 0 bis 5/etwa 0 bis 5.

In der Formel XIII steht

A für eine mesogene Gruppe der Formel

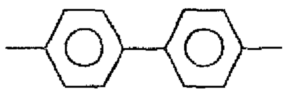

oder

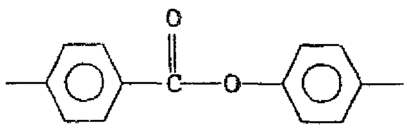

B für eine chirale Gruppe der Formel

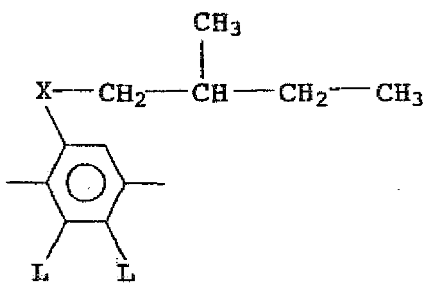,

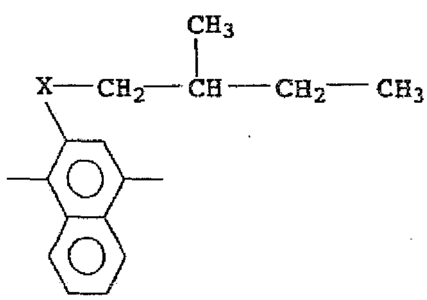,

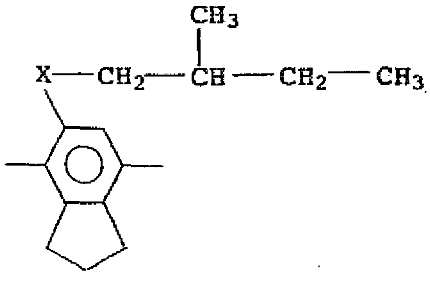

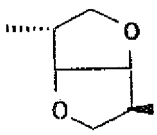
, (Isosorbid),
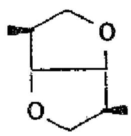
(Isomannid),
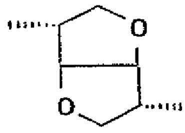
(Isoidid),

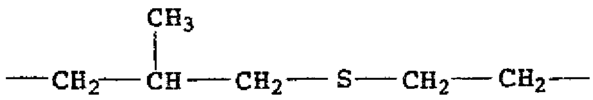
,

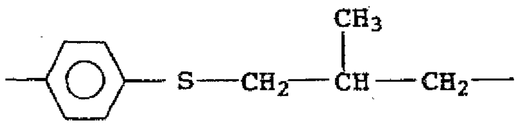
,

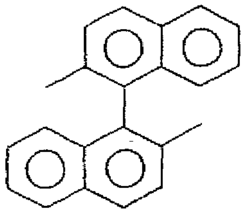
oder
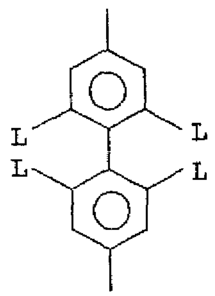
,

D für eine photoreaktive Gruppe der Formel

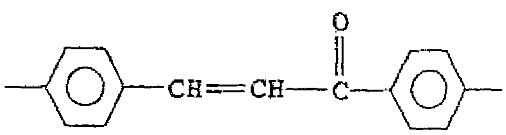

oder

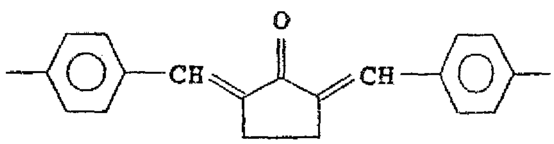

und

E für eine weitere, nicht-chirale Gruppe der Formel

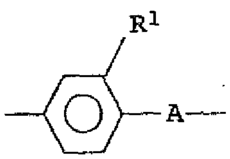
,

wobei in den obigen Formeln

L für Alkyl, Alkoxy, Halogen, COOR, OCOR, CONHR oder NHCOR steht,

X für S, O, N, $CH_2$ oder eine Einfachbindung steht,

R für Alkyl oder Wasserstoff steht,

A eine Einfachbindung, $(CH_2)_n$, $O(CH_2)_n$, $S(Cu_2)_n$, $NR(CH_2)_n$,

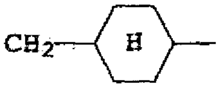 , 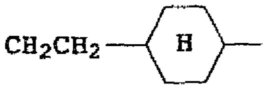 , 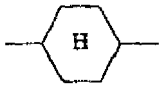 , 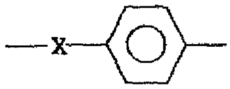

oder

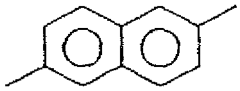

bedeutet,

$R^1$ Wasserstoff, Halogen, Alkyl oder Phenyl bedeutet und

n eine ganze Zahl von 1 bis 15 bedeutet.

Wenn $R^1$ für Alkyl, Halogen und A für eine Einfachbindung stehen oder wenn $R^1$ für H oder Alkyl und A für

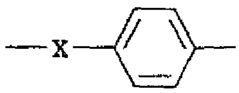 ,

$-O(CH_2)_n-$ , $-S(CH_2)_n$ oder $-NR(CH_2)_n$
steht, handelt es sich um löslichkeitsverbessernde Gruppen. Beispiele hierfür sind

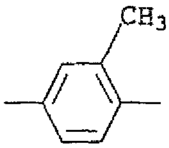 , 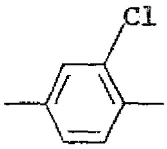 oder 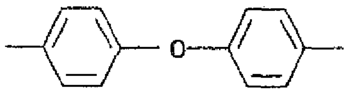 .

Isosorbid, Isomannid und/oder Isoidid ist die bevorzugte chirale Komponente.

Der Anteil der chiralen Diolstruktureinheiten liegt bevorzugt im Bereich von 1 bis 80 mol-% des Gesamtgehaltes an Diolstruktureinheiten, besonders bevorzugt 2 bis 20 mol-%, je nach gewünschtem Reflexionsverhalten.

Hier beschriebene Polymere der Gruppe d) sind beispielsweise vernetzbare, cholesterische Copolyisocyanate, wie sie in der US-A-08 834 745 beschrieben werden, auf die hiermit in vollem Umfang Bezug genommen wird. Solche Copolyisocyanate weisen wiederkehrende Einheiten der Formeln

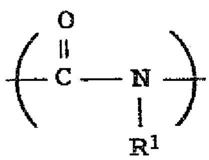 (III),

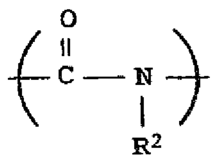 (IV)

und gegebenenfalls der Formel

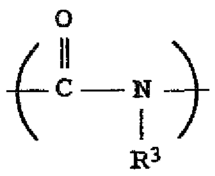 (V)

auf,
worin

- $R^1$ für einen chiralen aliphatischen oder aromatischen Rest steht,
- $R^2$ für einen vernetzbaren Rest steht und
- $R^3$ für einen achiralen Rest steht.

Soweit nicht anders angegeben, ist hier unter "Alkyl," (auch in Bedeutungen wie Alkoxy, Dialkyl, Alkylthio etc.) ein verzweigtes und unverzweigtes $C_1$-$C_{12}$-Alkyl, vorzugsweise $C_3$-$C_{12}$- besonders bevorzugt $C_4$-$C_{10}$-, insbesondere $C_6$-$C_{10}$-Alkyl zu verstehen.

Vorzugsweise ist $R^1$ ausgewählt unter (chiralen) verzweigten oder unverzweigten Alkyl-, Alkoxyalkyl-, Alkylthioalkyl-, Cycloalkyl-, Alkylphenyl- oder $C_3$-$C_9$-Epoxyalkylresten oder Resten von Estern von $C_1$-$C_6$-Fettsäuren mit $C_1$-$c_6$-Alkanolen oder $C_3$-$C_9$-Dialkylketanen. Der Esterrest kann sowohl über den Fettsäureanteil als auch über den Alkanolrest an das N-Atom gebunden sein. Der Rest $R^1$ kann 1, 2 oder 3 Substituenten aufweisen, die gleich oder verschieden und ausgewählt sind unter Alkoxygruppen, Di-$C_1$-$C_4$-alkylaminogruppen, CN, Halogenatomen oder $C_1$-$C_4$-Alkylthiogruppen.

Vorzugsweise ist $R^1$ ausgewählt unter Alkyl, Alkoxyalkyl, Resten von Estern von $C_1$-$C_6$-Fettsäuren mit $C_1$-$C_6$-Alkanolen, $C_3$-$C_9$-Dialkylketonen und epoxidierten $C_3$-$C_9$-Epoxyalkylresten, wobei $R^1$ durch 1 oder 2 Reste substituiert sein kann, die gleich oder verschieden und ausgewählt sind unter Alkoxy, Halogen, CN oder $CF_3$. Bevorzugte Substituenten für verzweigte oder unverzweigte Alkyl- oder Alkoxyreste sind ausgewählt unter Alkoxygruppen, Halogenatomen oder CN; für Ester von $C_1$-$C_6$-Fettsäuren mit $C_1$-$C_6$-Alkanolen unter Alkoxygruppen, Halogenatomen, CN oder $CF_3$ und für $C_3$-$C_9$-Dialkylketone unter Alkoxygruppen, Halogenatomen oder CN.

Insbesondere weist die Hauptkette des Restes $R^1$ eine Länge von 3 bis 12, insbesondere 6 bis 10, vorzugsweise 6 bis 8 Gliedern (C-, O- und/oder S-Atome) auf. Besonders bevorzugt sind Reste $R^1$, die ausgewählt sind unter

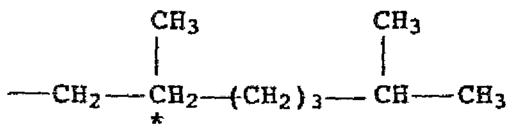 2,6-Dimethylheptyl

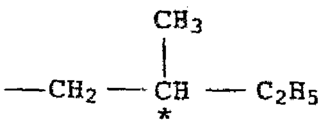 ,
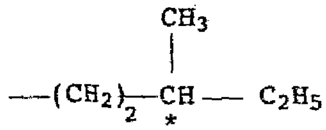 ,

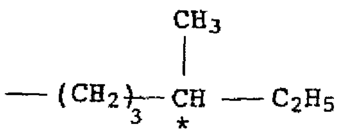 ,
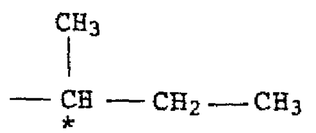 ,

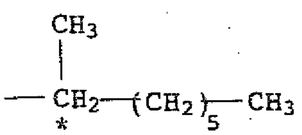 ,
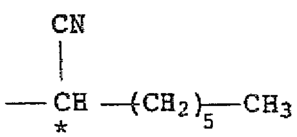 ,

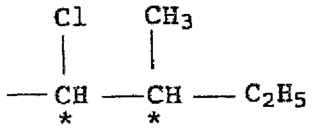 , 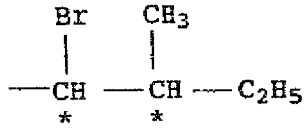 ,

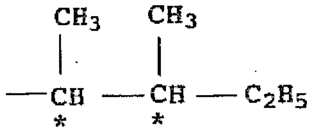 , 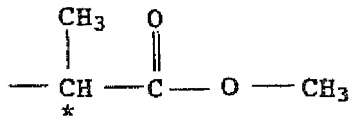 ,

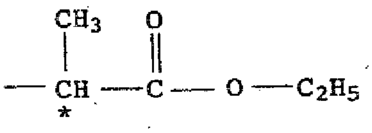 , 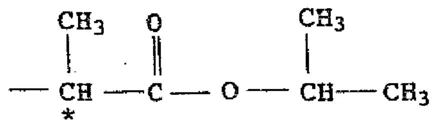 ,

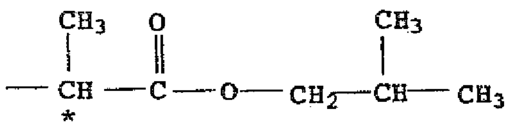 , 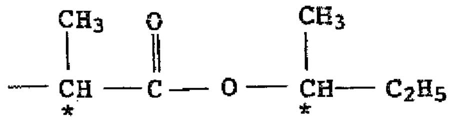 ,

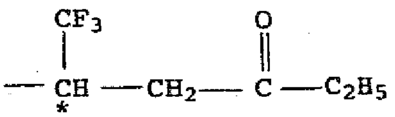 , 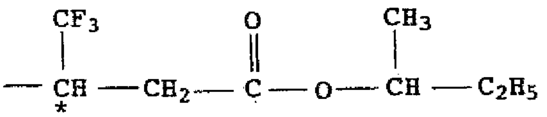 ,

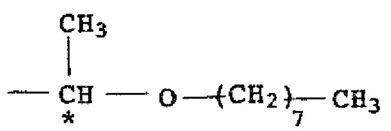 , 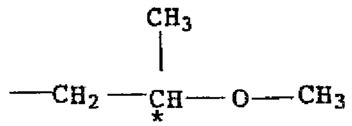 ,

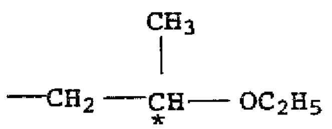 , 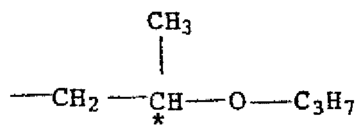 ,

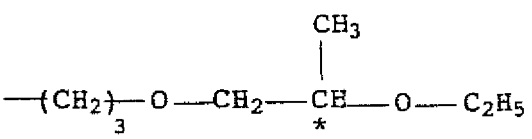 , 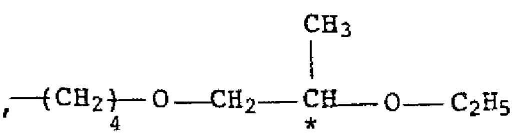 ,

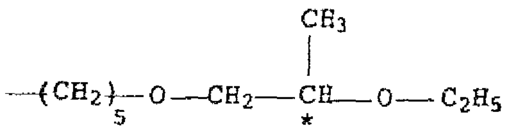 , 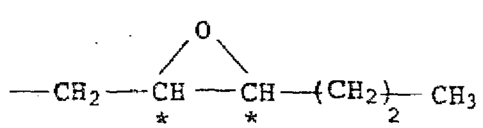 ,

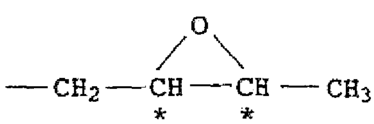 und 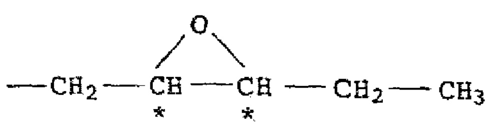

Ganz besonders bevorzugt ist die Komponente III der einsetzbaren Copolyisocyanate von 2,6-Dimethylheptylisocyanat abgeleitet.

Der Rest $R^2$ der einsetzbaren Copolyisocyanate ist vorzugsweise ausgewählt unter $C_3$-$C_{11}$-Alkenylresten, $C_4$-$C_{11}$-Vinyletherresten (= Vinyl-$C_2$-$C_9$-Alkylethern), ethylenisch ungesättigten $C_3$-$C_{11}$-Carbonsäureresten und Estern von ethylenisch ungesättigten $C_3$-$C_6$-Monocarbonsäuren mit $C_2$-$C_6$-Alkanolen, wobei die Bindung an das N-Atom über den Alkanolrest des Esters erfolgt. Besonders bevorzugt ist der Rest ausgewählt unter Methylacrylat, Ethylacrylat, Propylacrylat, n-Butylacrylat, Isobutylacrylat, 2-Ethylhexylacrylat, Methylmethacrylat, Ethylmethacrylat, Propylmethacrylat, n-Butylmethacrylat, Isobutylmethacrylat, 2-Ethylhexylmethacrylat, insbesondere unter Ethylacrylat oder Ethylmethacrylat.

Der Rest $R^3$ besitzt vorzugsweise die gleichen Bedeutungen wie der Rest $R^1$. Er ist aber achiral, d. h. er weist kein Chiralitätszentrum auf oder liegt als racemisches Gemisch vor.

Besonders bevorzugt weist die Hauptkette des Restes $R^3$ eine Länge von 4 bis 12, insbesondere 6 bis 10, vorzugsweise 6 bis 8 Gliedern (C-, O- und/oder S-Atome) auf. Ganz besonders bevorzugt ist die Komponente V der erfindungsgemäßen Copolyisocyanate von n-Hexylisocyanat, n-Heptylisocyanat oder n-Octylisocyanat abgeleitet.

Die Komponenten III, IV und V sind vorzugsweise im Molmengenverhältnis III:IV:V von etwa 1 bis 20 : 1 bis 20 : 50 bis 98, insbesondere etwa 5 bis 15 : 5 bis 15 : 65 bis 90, besonders bevorzugtermaßen etwa 15:10:75 vorhanden.

Die Einheiten III, IV und V können in den einsetzbaren Copolyisocyanaten statistisch verteilt sein.

Hier beschriebene Polymere der Gruppe e) sind chiral nematische Polyester mit flexiblen Ketten, die Isosorbid-, Isomannid- und/oder Isoidideinheiten, vorzugsweise Isosorbideinheiten, umfassen und zur Flexibilisierung der Ketten mindestens eine Einheit enthalten, die ausgewählt ist unter (und abgleitet von)

(a) aliphatischen Dicarbonsäuren,
(b) aromatischen Dicarbonsäuren mit flexiblem Spacer,
(c) $\alpha,\omega$-Alkanoiden,
(d) Diphenolen mit flexiblem Spacer und
(e) Kondensationsprodukten aus einem Polyalkylenterephthalat oder Polyalkylennaphthalat mit einem acylierten Diphenol und einem acylierten Isosorbid,

wie sie in der DE-A-197 04 506 beschrieben werden.

Die Polyester sind nicht kristallin und bilden stabile cholesterische Phasen aus, die sich beim Abkühlen unter die Glasübergangstemperatur einfrieren lassen. Die Glasübergangstemperaturen der Polyester wiederum liegen trotz der Flexibilisierung oberhalb von 80 °C, vorzugsweise oberhalb von 90 °C, insbesondere oberhalb von 100 °C.

Die einsetzbaren Polyester enthalten als Einheiten (a) vorzugsweise solche der Formel

$$-OC-(CH_2)_n-CO-$$

wobei n für eine Zahl im Bereich von 3 bis 15, insbesondere 4 bis 12 steht und besonders bevorzugt Adipinsäure;

als Einheiten (b) vorzugsweise solche der Formel

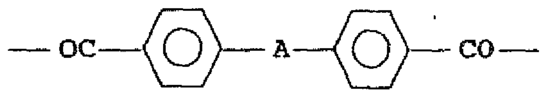

wobei

A für $(CH_2)_n$, $O(CH_2)_nO$ oder $(CH_2)_o$-O-$(CH_2)_p$ steht,

n für eine Zahl im Bereich von 3 bis 15, insbesondere 4 bis 12, besonders bevorzugt 4 bis 10 steht und

o und p unabhängig voneinander für eine Zahl im Bereich von 1 bis 7 stehen;

als Einheiten (c) vorzugsweise solche der Formel

$$-O-(CH_2)_n-O- \text{ oder } -O-(CH_2-CH_2-O)_m-,$$

wobei

n für eine Zahl im Bereich von 3 bis 15, insbesondere 4 bis 12, besonders bevorzugt 4 bis 10 steht und
m für eine Zahl im Bereich von 1 bis 10 steht; und

als Einheiten (d) vorzugsweise solche der Formel

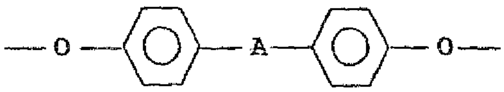

,

wobei

A für $(CH_2)_n$, $O(CH_2)_nO$ oder $(CH_2)_o$-O-$(CH_2)_p$ steht,
n für eine Zahl im Bereich von 3 bis 15, insbesondere 4 bis 12, besonders bevorzugt 4 bis 10 steht und
o und p unabhängig voneinander für eine Zahl im Bereich von 1 bis 7 stehen.

Die einsetzbaren Polyester enthalten außerdem als nicht flexible Säurekomponente vorzugsweise Dicarbonsäureeinheiten der Formel

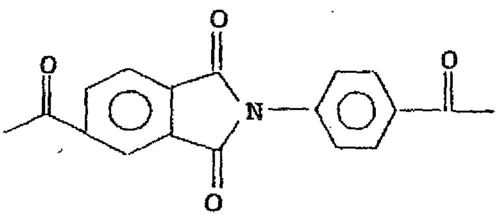 , 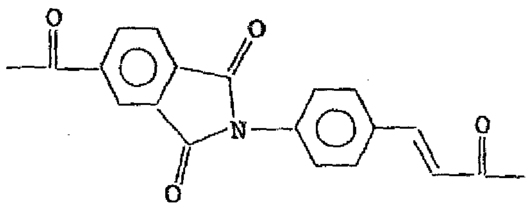 ,

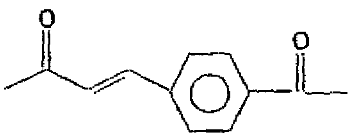 , 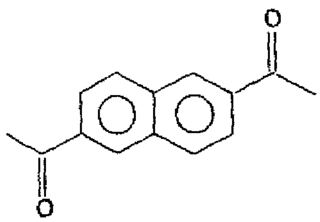 ,

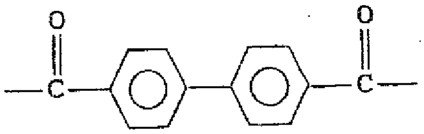 , 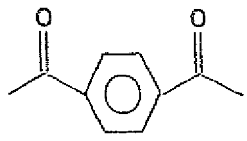 ,

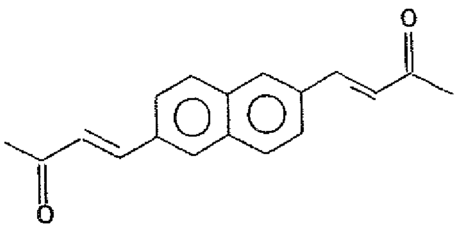 ,

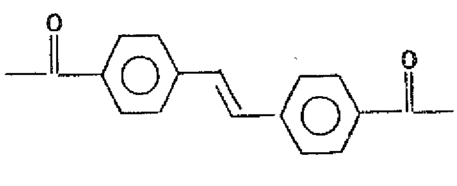 oder 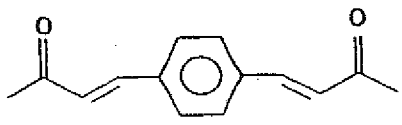

und als nicht flexible Alkoholkomponente Dioleinheiten der Formel

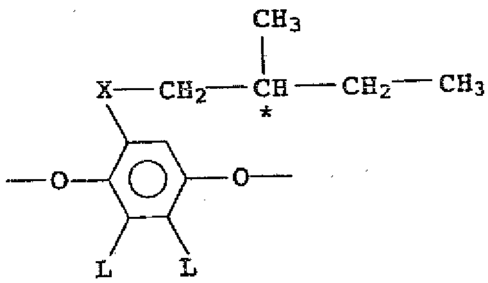 , 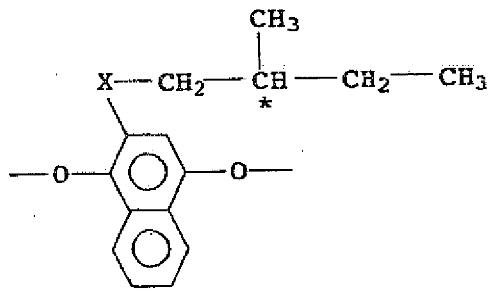 ,

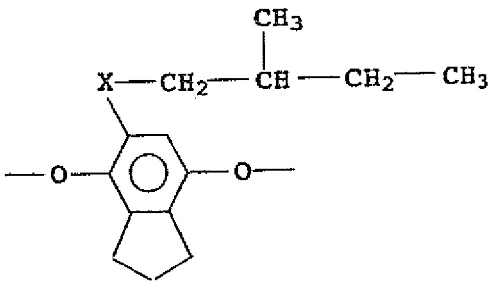 , 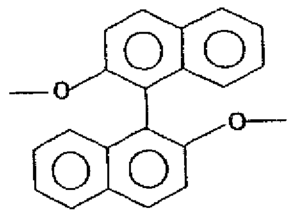 ,

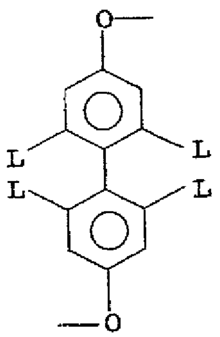 , 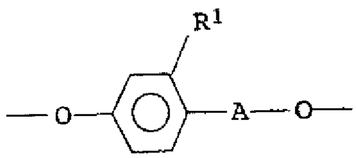 ,

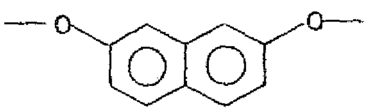 oder 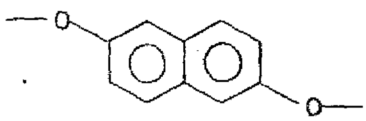

wobei in den obigen Formeln

- L für Alkyl, Alkoxy, Halogen, COOR, OCOR, CONHR oder NHCOR steht,
- X für S, O, N, $CH_2$ oder eine Einfachbindung steht,
- A eine Einfachbindung

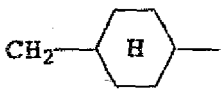 , 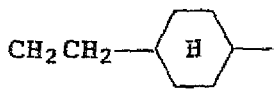 , 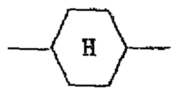 ,

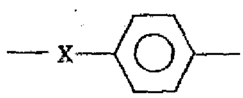 oder 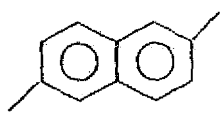

bedeutet und
wobei

$R^1$ Wasserstoff, Halogen, Alkyl oder Phenyl bedeutet und
R Alkyl oder Wasserstoff bedeutet.

Gegebenenfalls enthalten die einsetzbaren Polyester zusätzliche flexible Dioleinheiten der Formel

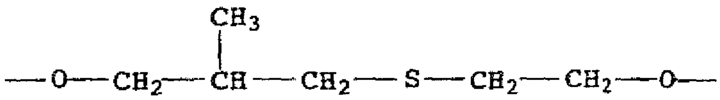

,

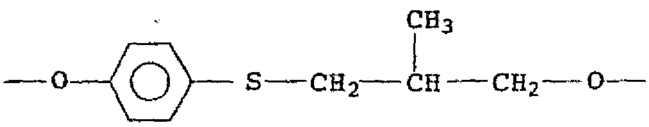

,

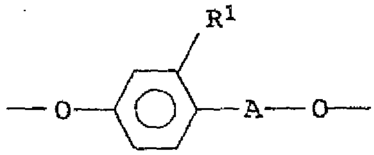

,

wobei

$R^1$ Wasserstoff, Halogen, Alkyl oder Phenyl bedeutet,

A $(CH_2)_n$, $O(CH_2)_n$, $S(CH_2)_n$ oder $NR(CH_2)_n$ bedeutet und

n eine Zahl von 1 bis 15 bedeutet.

Bevorzugte Polymere der Gruppe f) sind beispielsweise vernetzbare flüssigkristalline Polyorganosiloxane, wie sie in der EP-A-066 137 und der EP-A-358 208 beschrieben werden. Außerdem enthält das Gemisch der Gruppe f) eine chirale Verbindung. Geeignete chirale Verbindungen sind insbesondere die für die Gemische der Gruppe b) beschriebenen chiralen Dotierstoffe der Formel Ia.

Ganz besonders bevorzugt enthält die erfindungsgemäße Wärmeisolationsbeschichtung chirale Verbindungen und nematische Monomere gemäß Gruppe b), insbesondere chirale Verbindungen der Formel 2:

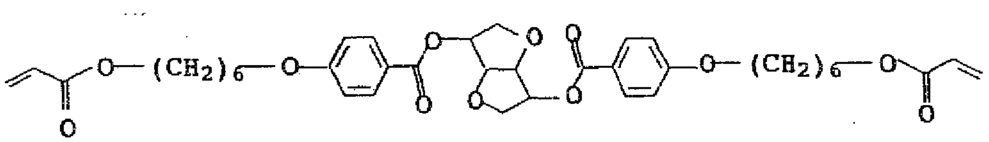

(2)

und/oder der Formel 5:

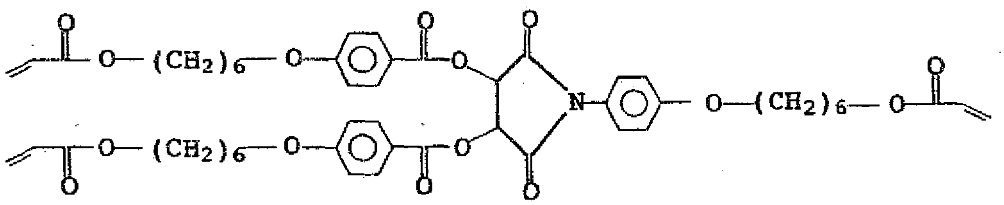

(5)

und nematische Monomere der Formel 1:

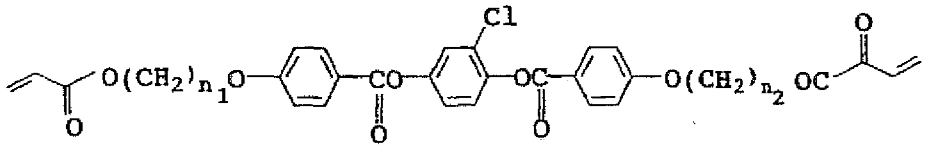

(1)

der Formel 3:

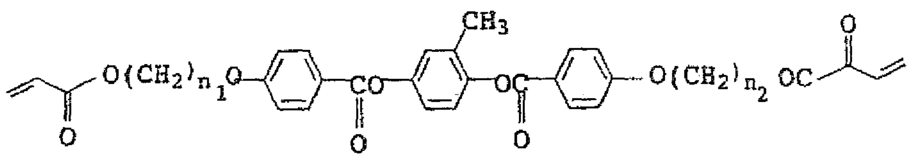

(3)

oder der Formel 4:

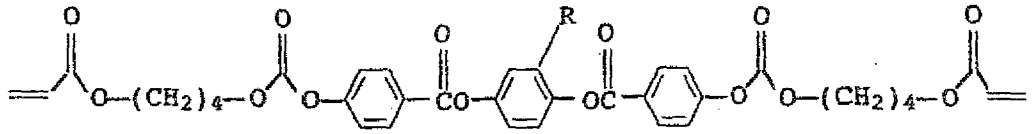

(4)

in gehärtetem Zustand, wobei in den Formeln 1 und 3 $n_1$ und $n_2$ unabhängig voneinander für 2, 4 oder 6 stehen und die Monomeren der Formel 1 oder 3 vorzugsweise als Gemische von Verbindungen mit $n_1/n_2$ = 2/4, 2/6, 4/2, 6/2, 4/4, 4/6, 6/4 oder 6/6 eingesetzt werden, und R in Formel 4 für H, Cl oder $CH_3$ steht.

Ein weiterer Gegenstand der vorliegenden Erfindung ist ein Verfahren zur Herstellung einer Wärmeisolationsbeschichtung, das dadurch gekennzeichnet ist, dass man auf ein transparentes Substrat mindestens eine cholesterische IR-reflektierende Schicht aufbringt, diese härtet, gegebenenfalls eine oder mehrere weitere cholesterische IR-reflektierende Schichten sowie gegebenenfalls ein die Drehrichtung des transmittierten circular-polarisierten Lichtes umkehrendes Medium aufbringt, härtet und so die Wärmeisolationsbeschichtung vervollständigt.

Das transparente Substrat, auf das man die IR-reflektierende(n) Schicht(en) aufbringt, kann beispielsweise ein Glasbaustein, eine Fensterscheibe oder eine zu Isolationszwecken auf eine Fensterscheibe zu klebende Folie sein.

Das Aufbringen der cholesterischen IR-reflektierenden Schicht auf das Substrat kann mittels üblicher Verfahren erfolgen, beispielsweise mittels Verfahren, die ausgewählt sind unter Luft-Rakelbeschichtung, Rakelbeschichtung, Luftmesserbeschichtung, Quetschbeschichtung, Imprägnierbeschichtung, Umkehrwalzenbeschichtung, Transferwalzenbeschichtung, Gravurbeschichtung, "kiss-coating", Gießbeschichtung, Spraybeschichtung, Spinnbeschichtung oder Druckverfahren, wie Hoch-, Tief-, Flexo-, Offset- oder Siebdruck. Die IR-reflektierende(n) Schicht(en) können niedrig- oder hochviskos, vorzugsweise jedoch niedrigviskos auf das Substrat aufgebracht werden. Zu diesem Zweck können die cholesterischen Gemische unverdünnt oder niedrigverdünnt bei erhöhter Temperatur oder hochverdünnt bei niedriger Temperatur auf das Substrat aufgebracht werden.

Die cholesterischen Gemische bzw. die Absorptionspigment enthaltenden Formulierungen können mit jedem geeigneten Verdünnungsmittel vor dem Aufbringen auf das Substrat verdünnt werden.

In dem erfindungsgemäßen Verfahren beispielsweise einsetzbare Verdünnungsmittel sind für die Verbindungen der Gruppen a) oder b) lineare oder verzweigte Ester, besonders Essigsäureester, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK).

Geeignete Verdünnungsmittel für die Polymere der Gruppe c) sind beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan, oder Ketone, wie Aceton. Werden Copolyisocyanate als Polymere der Gruppe d) eingesetzt, ist es sinnvoll, polymerisierbare Verdünnungsmittel, wie in der US-A-08 834 745 beschrieben, zu verwenden. Solche polymerisierbaren Verdünnungsmittel sind beispielsweise

- Ester $\alpha,\beta$-ungesättigter Mono- oder Dicarbonsäuren, insbesondere $C_3$-$C_6$-Mono- oder Dicarbonsäuren, mit $C_1$-$C_{12}$-Alkanolen, $C_2$-$C_{12}$-Alkandiolen oder deren $C_1$-$C_6$-Alkylether und Phenylether, beispielsweise Acrylate und

Methacrylate, Hydroxyethyl- oder Hydroxypropylacrylat oder -methacrylat sowie 2-Ethoxyethylacrylat oder -methacrylat;

- Vinyl-$C_1$-$C_{12}$-alkylether, wie Vinylethyl-, Vinylhexyl- oder Vinyloctylether;
- Vinylester von $C_1$-$C_{12}$-Carbonsäuren, wie Vinylacetat, Vinylpropionat, Vinyllaurat;
- $C_3$-$C_9$-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, $\alpha$-Methylstyrol, Chlorstyrol, und
- Verbindungen mit zwei oder mehreren vernetzbaren Gruppen, wie Diester von Diolen (einschließlich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonamethyletheracrylat, Phenoxyethylacrylat und Tetraethylenglykoldimethacrylat. Ein besonders bevorzugtes polymerisierbares Verdünnungsmittel ist Styrol.

Auch die Gemische der Gruppen a), b) oder c) können in kleinen Mengen polymerisierbare Verdünnungsmittel enthalten. Bevorzugte, a), b) oder c) zusetzbare, polymerisierbare Lösungsmittel sind Acrylate, insbesondere höherfunktionelle Acrylate wie Bis, Tris- oder Tetraacrylate, besonders bevorzugt hochsiedende Oligoacrylate. Die bevorzugte Zusatmenge liegt bei etwa 5 Gew.-%, bezogen auf das Gesamtgewicht des Gemischs.

Das cholesterische Gemisch kann für die photochemische Polymerisation handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenylphosphinoxid, 1-Hydroxycyclohexylphenylketon, 2-Benzyl-2-dimethylamino-1-(4-morpholinophenyl)-furan-1-on, Mischungen von Benzophenon und 1-Hydroxycyclohexylphenylketon, 2,2-Dimethoxy-2-phenylacetophenon, perfluorierte Diphenyltitanocene, 2-Methyl-1-(4-[methylthio] phenyl)-2-(4-morpholinyl)-1-propanon, 2-Hydroxy-2-methyl-1-phenyl-propan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,1-Campherchinon, Ethyl-d,1-campherchinon, Mischungen von Benzophenon und 4-Methylbenzophenon, Benzophenon, 4,4'-Bisdimethylamin-benzophenon, ($\eta^5$-Cyclopentadienyl) ($\eta^6$-isopropyl-phenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die cholesterischen Gemische können zur Einstellung der Viskosität und des Verlaufverhaltens mit zusätzlichen Komponenten vermischt werden.

Einsetzbar sind beispielsweise polymere Bindemittel und/oder monomere Verbindungen, die durch Polymerisation in ein polymeres Bindemittel überführt werden können. Als solche Mittel eignen sich z. B. in organischen Lösungsmitteln lösliche Polyester, Celluloseester, Polyurethane, Silikone, polyether- oder polyestermodifizierte Silikone. Besonders bevorzugt werden Celluloseester wie Celluloseacetobutyrat eingesetzt.

Auch die Zugabe geringer Mengen geeigneter Verlaufsmittel kann vorteilhaft sein. Einsetzbar sind etwa 0,005 bis 1 Ges.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält das cholesterische Gemisch auch Stabilisatoren gegen UV- und Wettereinflüsse. Hierfür eignen sich zum Beispiel Derivate des 2,4-Dihydroxybenzophenons, Derivate des 2--Cyan-3.3-diphenylacrylates, Derivate des 2,2',4,4'-Tetrahydroxybenzophenons, Derivate des Orthohydroxyphenylbenztriazols, Salicylsäureester, Orthohydraxyphenyl-S-triazine oder sterisch gehinderte Amine. Diese Stoffe können allein oder vorzugsweise in Form von Gemischen eingesetzt werden.

Die Härtung der aufgebrachten IR-reflektierende(n) Schicht(en) kann thermisch, photochemisch oder durch Elektronenstrahl erfolgen.

Selbstverständlich muss die Härtung in der cholesterischen Phase und unter Erhalt der cholesterischen Phase erfolgen.

Werden mehrere Schichten aufgebracht, können diese jeweils einzeln aufgetragen, gegebenenfalls getrocknet

und gehärtet werden. Es ist jedoch ebenso möglich, mehrere oder auch alle aufzubringende Schichten in einem Auftragungsvorgang nass-in-nass auf den zu beschichtenden Gegenstand aufzubringen, gegebenenfalls gemeinsam zu trocknen und danach gemeinsam zu härten. Voraussetzung für das gleichzeitige Auftragen der cholesterischen Schichten ist jedoch, dass es nicht zu einer Interdiffusion zwischen verschiedenen Schichten mit unterschiedlichem Reflexionsverhalten kommt.

Für das gleichzeitige Auftragen der cholesterischen Schichten sind Gießverfahren besonders geeignet, insbesondere Messer, bzw. Rakelgießverfahren, Extrusion- bzw. Abstreifgießverfahren sowie das Kaskadengießverfahren. Die genannten Gießverfahren sind beispielsweise in der DE-A-19 504 930, der EP-A-431 630, der DE-A-3 733 031 sowie der EP-A-452 959 beschrieben, worauf hiermit ausdrücklich Bezug genommen wird.

Ein weiterer Gegenstand der vorliegenden Erfindung ist ein Mehrkomponenten-Beschichtungssystem, umfassend Komponenten, die zur Ausbildung cholesterischer Schichten mit voneinander verschiedenen Reflexionsmaxima im Wellenlängenbereich > 750 nm befähigt sind. Mit Hilfe eines solchen erfindungsgemäßen Beschichtungssystems, dessen Komponenten beispielsweise als Lackformulierungen eingesetzt werden können, lassen sich beliebige Substrate mit einer erfindungsgemäßen Wärmeisolationsbeschichtung versehen.

Die erfindungsgemäße Wärmeisolationsbeschichtung ist insbesondere zur Herstellung von Isolierfenstern oder wärmeisolierenden transparenten Baustoffen oder zur Isolierung von Wohn-, Büro- oder Industriebauten gegen Wärmestrahlung geeignet. Außerdem ist die erfindungsgemäße Wärmeisolationsbeschichtung auch zur Verwendung im Automobilsektor, insbesondere zur Herstellung von wärmeisolierenden Verbundglasscheiben, besonders geeignet. Ihre Verwendung zu diesen Zwecken ist daher ein weiterer Gegenstand der vorliegenden Erfindung.

Die folgenden Beispiele erläutern die Erfindung, ohne sie jedoch darauf einzuschränken.

Für die Beispiele 1 bis 3 wurde eine nematische flüssigkristalline Mischung der Formel 1 verwendet, die bis 5 °C in der smektischen, bis 68 °C in der nematischen und oberhalb 68 °C in der isotropen Phase vorliegt (S 5 N 68 I).

Als chiraler Dotierstoff wurde in den Beispielen 1 und 2 die Verbindung der Formel 2 und in Beispiel 3 die Verbindung der Formel 5 eingesetzt.

Den in den Beispielen 1 bis 3 eingesetzten Mischungen wurde zur Verbesserung der Schichtbildung Celluloseacetobutyrat in einer Konzentration von 0,8 Gew.-%, bezogen auf die cholesterische Mischung, zugegeben und die gesamte Mischung in Butylacetat gelöst. Als Photoinitiator wurde 2,4,6-Trimethylbenzoyldiphenylphosphinoxid in einer Konzentration von 1,5 Gew.-%, bezogen auf die cholesterische Mischung, zugegeben. Diese Mischung wurde mit einem Rakel in einer Nassschichtdicke von 30 $\mu$m auf eine Glasplatte aufgetragen. In allen drei Beispielen bildete sich jeweils nach Abdampfen des Lösungsmittels eine homogene transparente Schicht. Diese wurde mit einer UV-Lichtquelle photochemisch vernetzt.

Beispiel 1:

Es wurden fünf cholesterische Schichten jeweils einzeln aufgetragen und wie oben beschrieben gehärtet. Die Zusammensetzungen der cholesterischen Schichten unterschieden sich in der Konzentration der Inhaltsstoffe, die der folgenden Tabelle 1 zu entnehmen ist:

| Schicht | $X_{ch}$ | $X_n$ | $\lambda_R$ |
|---|---|---|---|
| 1 | 0,032 | 0,968 | [220] |
| 2 | 0,027 | 0,973 | 943 |
| 3 | 0,024 | 0,976 | 1085 |
| 4 | 0,021 | 0,979 | 1250 |
| 5 | 0,018 | 0,982 | 1440 |

Alle Schichten enthielten zudem Celluloseacetobutyrat und 2,4,6-Trimethylbenzoyldiphenylphosphinoxid in den oben angegebenen Mengen.

Die Konzentration der chiralen Komponente wird mit $X_{ch}$ abgekürzt und als Molenbruch angegeben. Die Konzentration der nematischen Komponente wird mit $x_n$ abgekürzt und gleichfalls als Molenbruch angegeben. $\lambda_R$ gibt die Wellenlänge des Reflexionsmaximums in nm an.

Die übereinander aufgetragenen Schichten wiesen eine Reflexion von 47 % der eingestrahlten Lichtmenge im Wellenlängenbereich zwischen 752 und 1500 nm auf. Die Transparenz im sichtbaren Wellenlängenbereich (zwischen 400 und 700 nm) lag über 95 %.

Beispiel 2:

Für Beispiel 2 wurde die in Schicht 1 aus Beispiel 1 enthaltene Mischung verwendet. Diese Mischung wurde wie oben angegeben mit einem Rakel, der eine Feuchtfilmdicke von 30 μm aufträgt auf zwei Glasplatten aufgetragen, das Lösungsmittel abgezogen und der resultierende transparente Film mittels einer UV-Lichtquelle (Nitraphotlampe, Fa. OSRAM) photochemisch gehärtet. Danach wurde eine λ/2-Folie (Fa. Nitto) so zwischen die beschichteten Glasplatten plaziert, dass die flüssigkristallinen Schichten in Kontakt mit der λ/2-Folie standen. Das optische Verhalten dieser Anordnung wurde spektroskopisch untersucht. Es stellte sich heraus, dass die die λ/2-Folie enthaltende Beschichtung im Wellenlängenbereich von 752 bis 880 nm ein Reflexionsgrad von 89 % und eine Transmission im sichtbaren Wellenlängenbereich von mehr als 93 % aufwies.

Beispiel 3:

Mittels eines Rakels wurden zwei Schichten übereinander mit einer Feuchtfilmdicke von jeweils 30 μm einzeln nacheinander aufgetragen, das Lösungsmittel abgezogen und der resultierende ca. 16 μm dicke im Sichtbaren transparente Film photochemisch mit der oben angegebenen Lichtquelle gehärtet. Die beiden übereinander liegenden Schichten waren im Hinblick auf ihre stoffliche Zusammensetzung identisch; sie enthielten beide 13 molare Anteile Cholester auf 87 molare Anteile der nematischen Verbindung sowie Celluloseacetobutyrat und 2,4,6-Trimethylbenzoyldiphenylphosphinoxid in den oben angegebenen Mengen. Die Wellenlänge des Reflexionsmaximums lag für beide Schichten bei 820 nm. Die Schichten unterschieden sich jedoch in ihrer Händigkeit; die helikale Überstruktur der einen Schicht war rechtsgängig, die der anderen Schicht linksgängig. Spektroskopische Untersuchungen zeigten bei einer Wellenlänge von 820 nm eine 94%-ige selektive Reflexion. Die Halbwertsbreite der Reflexion betrug 121 nm. Die Transmission im sichtbaren Wellenlängenbereich betrug mehr als 93 %.

## Patentansprüche

1. Wärmeisolationsbeschichtung, umfassend mehrere vernetzte oder polymerisierte cholesterische Schichten mit gleichmäßiger Orientierung der cholesterischen Moleküle, die im infraroten Wellenlängenbereich von oberhalb 750 nm bis 2000 nm mindestens 40% der auftreffenden Strahlung reflektieren; wobei die Wärmeisolationsbeschichtung mindestens ein achirales, nematisches, polymerisierbares Monomer und einen chiralen Dotierstoff, oder mindestens ein achirales, flüssigkristallines vernetzbares Polymer und einen chiralen Dotierstoff jeweils in vernetztem oder polymerisiertem Zustand enthält, wobei der chirale Dotierstoff wenigstens eine Verbindung der allgemeinen Formel Ia ist,

$$[Z^1\text{--}Y^1\text{--}A^1\text{-}Y^2\text{--}M^a\text{--}Y^3\text{--}]_n X \qquad (Ia)$$

worin die Variablen die die folgenden Bedeutungen besitzen :

$Z^1$ eine polymerisierbare Gruppe oder ein Rest, der eine polymerisierbare Gruppe trägt, ausgewählt unter: $CH_2 = CH-$ , $CH \equiv C-$ ,

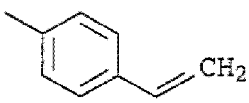 , 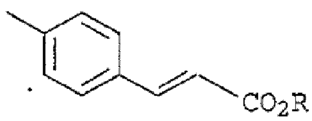

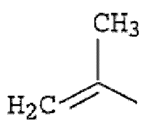 , 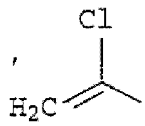 ,

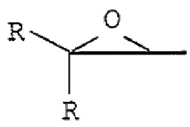 , 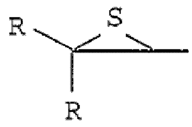 , 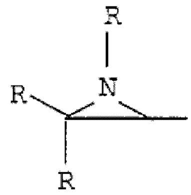 , 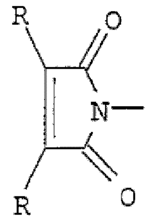

-N=C=O, -N=C=S, - O-C≡N,

-COOH, -OH, und $-NH_2$;

$Y^1$, $Y^2$, $Y^3$ unabhängig voneinander chemische Bindungen, Sauerstoff, Schwefel,

- CO-O-,-O-CO-. -O-CO-O-,
- CO-S- , -S-CO-
- CO-N(R)- , -N(R)-CO-, $CH_2O$ oder $OCH_2$,

$A^1$ ein Spacer, ausgewählt unter linearen aliphatischen Gruppen, enthaltend 2 bis 30 C-Atome,
$M^a$ für die Gruppe der Formel $(T-Y^8)_s-T$ steht,

worin $Y^8$ für $Y^1$ steht,
s für 1 bis 3 steht,
T für gleiche oder verschiedene zweiwertige isocycloaliphatische, heterocycloaliphatische, isoaromatische oder heteroaromatische Reste steht,

X ein n-wertiger chiraler Rest, ausgewählt unter:

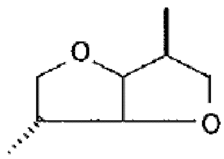 , 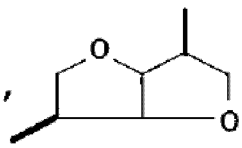 , 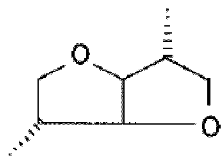 ,

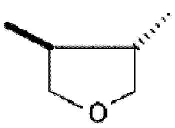 , 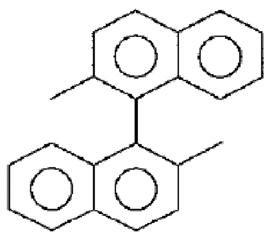 oder 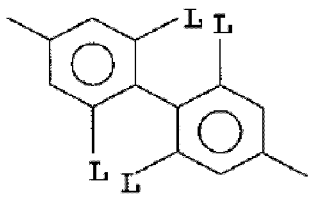

R Wasserstoff oder $C_1$-$C_4$-Alkyl,
n 1 bis 6

wobei die Reste $Z^1$, $Y^1$, $Y^2$, $Y^3$, $A^1$ und $M^a$, gleich oder verschieden sein können, wenn n größer als 1 ist; wobei die Wärmeisolationsbeschichtung die 2 bis 20 cholesterische IR-reflektierende Schichten umfasst, die voneinander verschiedene Reflexionsmaxima im Wellenlängenbereich > 750 nm aufweisen.

2. Wärmeisolationsbeschichtung nach Anspruch 1, die mehrere cholesterische Schichten, vorzugsweise eine durch 2 teilbare Anzahl cholesterischer Schichten umfasst, wobei die Ganghöhe der helikalen Überstrukturen von jeweils 2 Schichten gleich, ihre Händigkeit jedoch unterschiedlich ist.

3. Wärmeisolationsbeschichtung nach einem der vorhergehenden Ansprüche, die zwischen Schichten mit helikaler Überstruktur gleicher Ganghöhe und gleicher Händigkeit ein Medium aufweist, das die Drehrichtung des transmittierten circular-polarisierten Lichtes umkehrt, insbesondere eine sogenannte λ/2-Folie oder -Platte.

4. Wärmeisolationsbeschichtung nach Anspruch 3, die im Wellenlängenbereich oberhalb 750 nm, insbesondere im Wellenlängenbereich von 751 nm bis etwa 2000 nm mindestens 75% der auftreffenden Strahlung reflektiert.

5. Verfahren zur Herstellung einer Wärmeisolationsbeschichtung nach einem der vorhergehenden Ansprüche, **dadurch gekennzeichnet, dass** man auf ein transparentes Substrat mindestens eine cholesterische IR-reflektierende Schicht aufbringt, diese härtet, eine oder mehrere weitere cholesterische IR-reflektierende Schichten sowie gegebenenfalls ein die Drehrichtung des transmittierten circular-polarisierten Lichtes umkehrendes Medium aufbringt, härtet und so die Wärmeisolationsbeschichtung vervollständigt.

6. Wärmeisolierende Verbundglasscheibe umfassend eine Wärmeisolationsbeschichtung nach einem der Ansprüche 1 bis 4.

7. Verwendung einer Wärmeisolationsbeschichtung nach einem der Ansprüche 1 bis 4 zur Herstellung von Isolierfenstern oder wärmeisolierenden transparenten Baustoffen oder zur Isolation von Wohn-, Büro- oder Industriebauten.

8. Verwendung einer Wärmeisolationsbeschichtung nach einem der Ansprüche 1 bis 4 im Automobilsektor, insbesondere zur Herstellung von wärmeisolierenden Verbundglasscheiben.

9. Folie, insbesondere Klebefolie, umfassend eine Wärmeisolationsbeschichtung nach einem der Ansprüche 1 bis 4.

## Claims

1. A heat-insulating coating comprising two or more crosslinked or polymerized cholesteric layers with uniform orientation of the cholesteric molecules, which reflect at least 40% of the incident radiation in the infrared wavelength range from above 750 nm to 2000 nm; the heat-insulating coating comprising at least one achiral, nematic, polymerizable monomer and a chiral dopant, or at least one achiral, liquid-crystalline crosslinkable polymer and a chiral dopant, in each case in the crosslinked or polymerized state, the chiral dopant being at least one compound of the general formula Ia,

$$[Z^1\text{-}Y^1\text{-}A^1\text{-}Y^2\text{-}M^a\text{-}Y^3\text{-}]_n\ X \qquad \text{(Ia)}$$

in which the variables possess the following definitions:

$Z^1$ is a polymerizable group or a radical which carries a polymerizable group, selected from:
$CH_2$= CH- , CH ≡C- ,

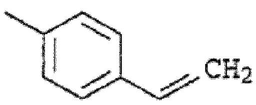 , 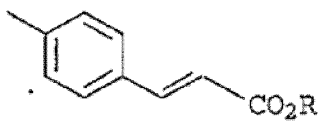

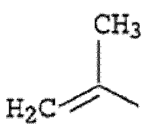 , 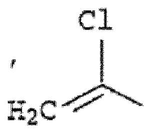 ,

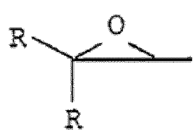 , 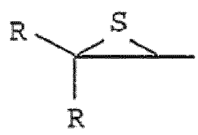 , 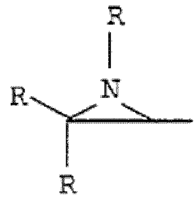 , 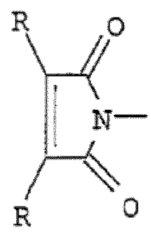

-N=C=O, -N=C=S, -O-C≡N,

-COOH, -OH, and $-NH_2$;

$Y^1$, $Y^2$ and $Y^3$ independently of one another are chemical bonds, oxygen, sulfur,

- CO-O-, -O-CO-. -O-CO-O,
- CO-S-. -S-CO-
- CO-N(R)- , -N(R)-CO-, $CH_2O$ or $OCH_2$,

$A^1$ is a spacer selected from linear aliphatic groups containing 2 to 30 carbon atoms,
$M^a$ is the group of the formula $(T-Y^8)_s-T$,

in which $Y^8$ is $Y^1$,
s is 1 to 3,
T is identical or different divalent isocycloaliphatic, heterocycloaliphatic, isoaromatic or heteroaromatic radicals,

X is an n-valent chiral radical selected from:

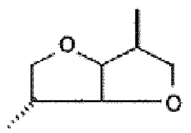 , 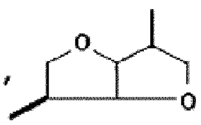 , 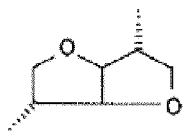 ,

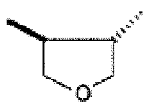 , 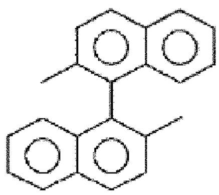 or 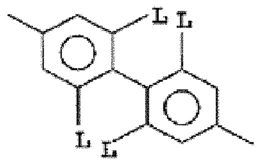

R is hydrogen or $C_1$-$C_4$ alkyl,
n is 1 to 6,

where the radicals $Z^1$, $Y^1$, $Y^2$, $Y^3$, $A^1$, and $M^a$ may be identical or different if n is greater than 1;
the heat-insulating coating comprising the 2 to 20 cholesteric IR-reflecting layers which have mutually different reflection maxima in the wavelength range > 750 nm.

2. The heat-insulating coating according to claim 1, which comprises two or more cholesteric layers, preferably a number of cholesteric layers which can be divided by 2, the pitch of the helical superstructures of 2 layers in each case being identical but their handedness being different.

3. The heat-insulating coating according to either of the preceding claims which between layers having a helical superstructure of identical pitch and identical handedness has a medium which reverses the direction of rotation of the transmitted circularly polarized light, especially what is known as a λ/2 film or plate.

4. The heat-insulating coating according to claim 3 which reflects at least 75% of the incident radiation in the wavelength range above 750 nm, in particular in the wavelength range from 751 nm to about 2000 nm.

5. A process for producing a heat-insulating coating according to any of the preceding claims, which comprises applying to a transparent substrate at least one cholesteric IR-reflecting layer, curing it, applying one or more further cholesteric IR-reflecting layers and, optionally, a medium which reverses the direction of rotation of the transmitted circularly polarized light, curing said layer(s) and so completing the heat-insulating coating.

6. A heat-insulating laminated glass screen comprising a heat-insulating coating according to any of claims 1 to 4.

7. The use of a heat-insulating coating according to any of claims 1 to 4 for producing insulating windows or heat-insulating transparent construction materials or for insulating residential, office or industrial buildings.

8. The use of a heat-insulating coating according to any of claims 1 to 4 in the automotive sector, especially for producing heat-insulating laminated glass screens.

9. A film, in particular an adhesive film, comprising a heat-insulating coating according to any of claims 1 to 4.

**Revendications**

1. Revêtement d'isolation thermique, comprenant plusieurs couches cholestériques réticulées ou polymérisées avec une orientation uniforme des molécules cholestériques, qui réfléchissent dans la plage de longueurs d'onde infrarouge de plus de 750 nm à 2 000 nm au moins 40 % du rayonnement incident ; le revêtement d'isolation thermique contenant au moins un monomère polymérisable nématique achiral et un dopant chiral, ou au moins un polymère réticulable liquide cristallin achiral et un dopant chiral, chacun à l'état réticulé ou polymérisé, le dopant chiral étant au moins un composé de formule générale Ia

$$[Z^1\text{-}Y^1\text{-}A^1\text{-}y^2\text{-}M^a\text{-}Y^3\text{-}]_n\ X \qquad \text{(Ia)}$$

dans laquelle les variables ont les significations suivantes :

$Z^1$ un groupe polymérisable ou un radical qui porte un groupe polymérisable, choisi parmi :

$CH_2=CH-$, $CH\equiv C-$, 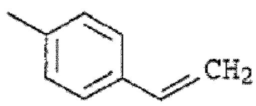, 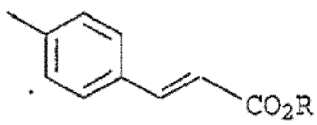

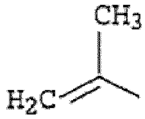, 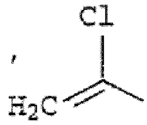,

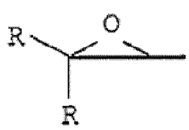, 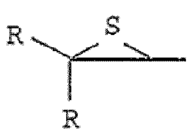, 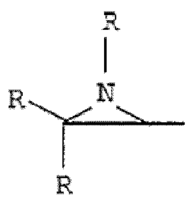, 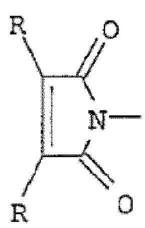

-N=C=O, -N=C=S, -O-C≡N,

-COOH, -OH et $-NH_2$;

$Y^1$, $Y^2$, $Y^3$ indépendamment les uns des autres des liaisons chimiques, oxygène, soufre,

- CO-O-, -O-CO-, -O-CO-O-,
- CO-S-, -S-CO-,
- CO-N(R)-, -N(R)-CO)-, $CH_2O$ ou $OCH_2$,

$A^1$ un espaceur, choisi parmi les groupes aliphatiques linéaires, contenant 2 à 30 atomes C,
$M^a$ représente le groupe de formule $(T\text{-}Y^8)_s\text{-}T$,

$Y^8$ représentant $Y^1$,
s représentant 1 à 3,
T représentant des radicaux isocycloaliphatiques, hétérocycloaliphatiques, isoaromatiques ou hétéroaromatiques bivalents identiques ou différents,

X un radical chiral n-valent, choisi parmi :

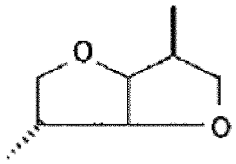
,
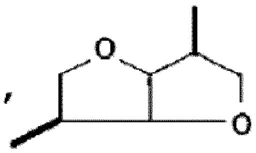
,
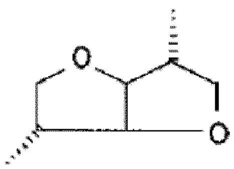
,
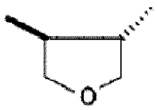
,
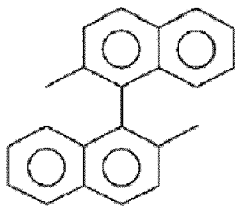
ou
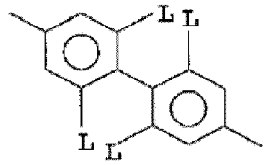

R hydrogène ou alkyle en $C_1$-$C_4$,
n 1 à 6,

les radicaux $Z^1$, $Y^1$, $Y^2$, $Y^3$, $A^1$ et $M^a$ pouvant être identiques ou différents lorsque n est supérieur à 1 ; le revêtement d'isolation thermique comprenant 2 à 20 couches cholestériques réfléchissant l'IR, qui présentent des maxima de réflexion différents les uns des autres dans la plage de longueurs d'onde > 750 nm.

**2.** Revêtement d'isolation thermique selon la revendication 1, qui comprend plusieurs couches cholestériques, de préférence un nombre divisible par 2 de couches cholestériques, le pas des superstructures hélicoïdales de 2 couches étant à chaque fois identique, mais leur latéralité étant toutefois différente.

**3.** Revêtement d'isolation thermique selon l'une quelconque des revendications précédentes, qui comprend entre des couches de superstructure hélicoïdale de même pas et de même latéralité un milieu qui inverse la direction de rotation de la lumière polarisée circulairement transmise, notamment une feuille ou une plaque dite $\lambda/2$.

**4.** Revêtement d'isolation thermique selon la revendication 3, qui réfléchit dans la plage de longueurs d'onde supérieure à 750 nm, notamment dans la plage de longueur d'onde de 751 nm à environ 2 000 nm, au moins 75 % du rayonnement incident.

**5.** Procédé de fabrication d'un revêtement d'isolation thermique selon l'une quelconque des revendications précédentes, **caractérisé en ce qu'**au moins une couche cholestérique réfléchissant l'IR est appliquée sur un substrat transparent, celle-ci est durcie, une ou plusieurs couches cholestériques réfléchissant l'IR supplémentaires, ainsi qu'éventuellement un milieu inversant la direction de rotation de la lumière polarisée circulairement transmise, sont appliqués, durcis et le revêtement d'isolation thermique est ainsi complété.

**6.** Vitre en verre composite thermiquement isolante, comprenant un revêtement d'isolation thermique selon l'une

quelconque des revendications 1 à 4.

**7.** Utilisation d'un revêtement d'isolation thermique selon l'une quelconque des revendications 1 à 4 pour la fabrication de fenêtres isolantes ou de matériaux de construction transparents thermiquement isolants ou pour l'isolation d'immeubles résidentiels, de bureaux ou industriels.

**8.** Utilisation d'un revêtement d'isolation thermique selon l'une quelconque des revendications 1 à 4 dans le secteur automobile, notamment pour la fabrication de vitres en verre composites thermiquement isolantes.

**9.** Feuille, notamment feuille adhésive, comprenant un revêtement d'isolation thermique selon l'une quelconque des revendications 1 à 4.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4637896 A
- US 5629055 A
- US 5352312 A
- US 5016985 A
- DE 19602848 A
- DE 4342280 A
- DE P4342280
- DE 3535547 A
- DE 4408171 A
- DE 4408170 A
- DE 4405316 A
- WO 9700600 A
- DE 19532408 A
- DE 19713638 A
- DE 19717371 A
- DE 19631658 A
- US 08834745 A
- DE 19704506 A
- EP 066137 A
- EP 358208 A
- DE 19504930 A
- EP 431630 A
- DE 3733031 A
- EP 452959 A